# EUROPEAN PATENT APPLICATION

(11) **EP 4 354 945 A1**
(43) Date of publication of application: **17.04.2024**
(21) Application number: 22811015.1
(22) Date of filing: 29.03.2022
(51) Int. Cl.: H04W 24/10, H04W 72/04

(54) **TERMINAL, WIRELESS COMMUNICATION METHOD, AND BASE STATION**

(30) Priority: 27.05.2021 JP 2021089589
(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP); WANG, Jing, Beijing 100190 (CN); CHEN, Lan, Beijing 100190 (CN)
(74) Representative: Hoffmann Eitle
(86) International application number: PCT/JP2022/015543
(87) International publication number: WO 2022/249740

(57) **Abstract**

A terminal according to one aspect of the present disclosure includes: a control section that, for a channel state information (CSI) report that includes, for each one group, a plurality of resource indicators and a plurality of measurement results corresponding to each of the plurality of resource indicators, determines ordering of the plurality of resource indicators and the plurality of measurement results included in the CSI report based on a plurality of sets of channel measurement resources (CMR), and that determines the quantization bit-width for the plurality of measurement results; and a transmitting section that transmits the CSI report, in which the control section determines, based on configuration of a specific higher layer parameter, whether or not the same plurality of resource indicators can be included, for one CMR set, in the CSI report. According to an aspect of the present disclosure, a CSI report related to group-based beam reporting can be suitably used.

## Description

### Technical Field

The present disclosure relates to a terminal, a radio communication method, and a base station in next-generation mobile communication systems.

### Background Art

In a Universal Mobile Telecommunications System (UMTS) network, specifications of Long Term Evolution (LTE) have been drafted for the purpose of further increasing data rates, providing low latency, and the like (Non Patent Literature 1). In addition, the specifications of LTE-Advanced (3GPP Rel. 10 to 14) have been drafted for the purpose of further increasing capacity and advancement of LTE (Third Generation Partnership Project (3GPP) releases (Rel.) 8 and 9).

Successor systems to LTE (for example, also referred to as 5th generation mobile communication system (5G), 5G+ (plus), 6th generation mobile communication system (6G), New Radio (NR), or 3GPP Rel. 15 and subsequent releases) are also being studied.

### Citation List

### Non Patent Literature

Non Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April 2010

### Summary of Invention

### Technical Problem

In NR of Rel. 15 and 16, a UE in which group-based beam reporting is configured as enabled is capable of reporting only two different beam indexes for each report setting. Therefore, in preparation for Rel. 17, beam management-related extensions of a user terminal (user terminal, User Equipment (UE)) having a plurality of panels (multi-panels), a plurality of transmission and reception points (multiple transmission/reception points (TRP)), and the like are being studied.

However, how to configure the CSI report in a case where beam management-related extension is performed has not yet been studied. If this is not clarified, appropriate communication between the TRP and the UE cannot be performed, and the communication throughput may decrease.

Therefore, one object of the present disclosure is to provide a terminal, a radio communication method, and a base station that can suitably use a CSI report related to group-based beam reporting.

### Solution to Problem

A terminal according to one aspect of the present disclosure includes: a control section that, for a channel state information (CSI) report that includes, for each one group, a plurality of resource indicators and a plurality of measurement results corresponding to each of the plurality of resource indicators, determines ordering of the plurality of resource indicators and the plurality of measurement results included in the CSI report based on a plurality of sets of channel measurement resources (CMR), and that determines the quantization bit-width for the plurality of measurement results; and a transmitting section that transmits the CSI report, in which the control section determines, based on configuration of a specific higher layer parameter, whether or not the same plurality of resource indicators can be included, for one CMR set, in the CSI report.

### Advantageous Effects of Invention

According to an aspect of the present disclosure, a CSI report related to group-based beam reporting can be suitably used.

### Brief Description of Drawings

[FIG. 1] Figs. 1A and 1B are diagrams illustrating an example of RRC information elements regarding CSI report configuration and CSI resource configuration.
[FIG. 2] Figs. 2A and 2B are diagrams illustrating an example of RRC information elements regarding an NZP CSI-RS resource set and a CSI-SSB resource set.
[FIG. 3] Fig. 3 is a diagram illustrating an example of RRC information elements regarding a TCI state.
[FIG. 4] Fig. 4 is an excerpt of an RRC information element "CSI-ReportConfig".
[FIG. 5] Fig. 5 is a diagram illustrating an example of a CSI report in Rel. 15 NR.
[FIG. 6] Fig. 6 is a diagram illustrating an example of a beam usage environment assumed for multiple group-based beam reporting.
[FIG. 7] Fig. 7 is a diagram illustrating an example of a mode 1 CSI report of multiple group-based beam reporting.
[FIG. 8] Fig. 8 is a diagram illustrating an example of a mode 2 CSI report of multiple group-based beam reporting.
[FIG. 9] Fig. 9 is a diagram illustrating an example of CMR configuration.
[FIG. 10] Figs. 10A to 10C are diagrams illustrating an example of ordering of one or two beam groups/pairs according to Embodiment 2-1.
[FIG. 11] Fig. 11 is a diagram illustrating an example of beam reporting according to Embodiment 2-2.
[FIG. 12] Fig. 12 is a diagram illustrating an example of a schematic configuration of a radio communication system according to one embodiment.
[FIG. 13] Fig. 13 is a diagram illustrating an example of a configuration of a base station according to one embodiment.
[FIG. 14] Fig. 14 is a diagram illustrating an example of a configuration of a user terminal according to one embodiment.
[FIG. 15] Fig. 15 is a diagram illustrating an example of a hardware configuration of a base station and a user terminal according to one embodiment.

### Description of Embodiments

### (CSI)

In NR, a UE measures a channel state by using a reference signal (or a resource for the reference signal) and feeds back (reports) Channel State Information (CSI) to a network (for example, a base station).

The UE may measure the channel state using at least one of a Channel State Information Reference Signal (CSI-RS), a Synchronization Signal/Physical Broadcast Channel (SS/PBCH) block, a Synchronization Signal (SS), a Demodulation Reference Signal (DMRS), and the like.

A CSI-RS resource may include at least one of a Non Zero Power (NZP) CSI-RS resource, a Zero Power (ZP) CSI-RS resource, and a CSI Interference Measurement (CSI-IM) resource.

A resource for measuring a signal component for CSI may be referred to as a Signal Measurement Resource (SMR) or a Channel Measurement Resource (CMR). The SMR (CMR) may include, for example, an NZP CSI-RS resource for channel measurement, an SSB, and the like.

A resource for measuring an interference component for CSI may be referred to as an Interference Measurement Resource (IMR). The IMR may include, for example, at least one of the NZP CSI-RS resource for interference measurement, an SSB, a ZP CSI-RS resource, and a CSI-IM resource.

The SS/PBCH block is a block including a synchronization signal (for example, Primary Synchronization Signal (PSS) and Secondary Synchronization Signal (SSS)) and a PBCH (and the corresponding DMRS), and may be called an SS block (SSB) or the like.

Note that, the CSI may include at least one of a Channel Quality Indicator (CQI), a Precoding Matrix Indicator (PMI), a CSI-RS Resource Indicator (CRI), an SS/PBCH Block Resource Indicator (SSBRI), a Layer Indicator (LI), a Rank Indicator (RI), an L1-RSRP (Layer 1 Reference Signal Received Power), L1-RSRQ (Reference Signal Received Quality), an L1-SINR (Signal to Interference plus Noise Ratio), an L1-SNR (Signal to Noise Ratio), and the like.

The CSI may have a plurality of parts. A CSI part 1 may include information with a relatively small number of bits (for example, the RI). A CSI part 2 may include information with a relatively large number of bits (for example, the CQI) such as information determined on the basis of the CSI part 1.

Furthermore, the CSI may also be classified into several CSI types. The type and size of information to be reported may be different depending on the CSI type. For example, a CSI type configured for performing communication using a single beam (also referred to as type 1 (type I) CSI, CSI for single beam, or the like), and a CSI type configured for performing communication using multiple beams (also referred to as type 2 (type II) CSI, CSI for multiple beams, or the like) may be defined. The application of CSI types is not limited to the foregoing types.

As a CSI feedback method, Periodic CSI (P-CSI) reporting, Aperiodic CSI (A-CSI) reporting, Semi-Persistent CSI (SP-CSI) reporting and the like are under study.

The UE may be notified of CSI measurement configuration information by using higher layer signaling, physical layer signaling, or a combination thereof.

In the present disclosure, the higher layer signaling may be any of, for example, Radio Resource Control (RRC) signaling, Medium Access Control (MAC) signaling, broadcast information, and the like, or a combination thereof.

For example, a MAC Control Element (MAC CE), a MAC Protocol Data Unit (PDU), or the like may be used for the MAC signaling. The broadcast information may be, for example, a Master Information Block (MIB), a System Information Block (SIB), Remaining Minimum System Information (RMSI), Other System Information (OSI), or the like.

The physical layer signaling may be, for example, Downlink Control Information (DCI).

The CSI measurement configuration information may be configured using, for example, the RRC information element "CSI-MeasConfig". The CSI measurement configuration information may include CSI resource configuration information (RRC information element "CSI-ResourceConfig"), CSI report configuration information (RRC information element "CSI-ReportConfig"), and the like. The CSI resource configuration information is related to a resource for CSI measurement, and the CSI report configuration information is related to how the UE performs CSI reporting.

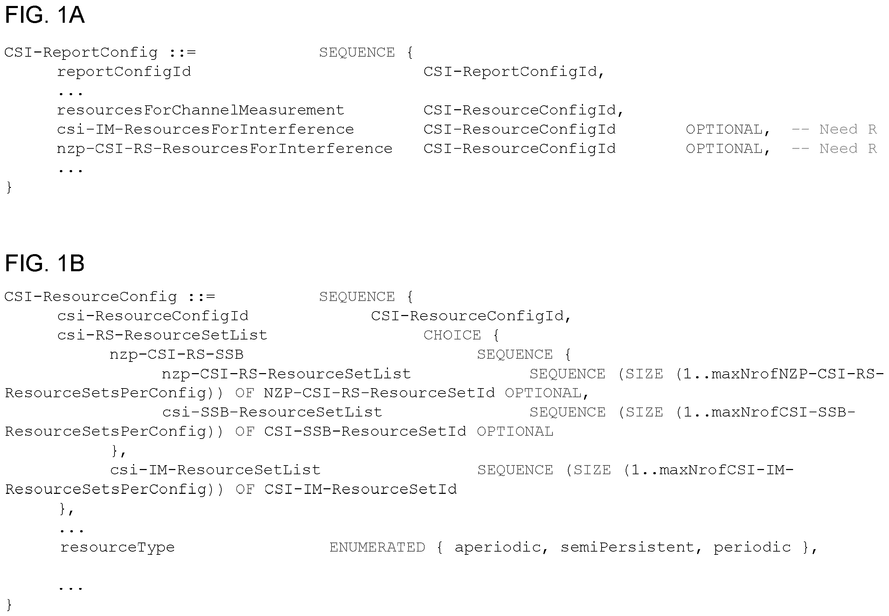

Figs. 1A and 1B are diagrams illustrating an example of RRC information elements regarding CSI report configuration and CSI resource configuration. In this example, an excerpt of a field (which may be referred to as a parameter) included in an information element is illustrated. Figs. 1A and 1B are described using Abstract Syntax Notation One (ASN.1) notation. Note that drawings relating to other RRC information elements (or RRC parameters) of the present disclosure are also described using similar notation.

As illustrated in Fig. 1A, the CSI report configuration information ("CSI-ReportConfig") includes resource information for channel measurement ("resourcesForChannelMeasurement"). Furthermore, the CSI report configuration information may include resource information for interference measurement (for example, NZP CSI-RS resource information for interference measurement ("nzp-CSI-RS-ResourcesForInterference"), CSI-IM resource information for interference measurement ("csi-IM-ResourcesForInterference"), and the like. These pieces of resource information correspond to CSI resource configuration information IDs (Identifiers) ("CSI-ResourceConfigId").

Note that the CSI resource configuration information IDs (which may be referred to as CSI resource configuration IDs) corresponding to respective pieces of resource information may have one or more identical values or may each have different values.

As illustrated in Fig. 1B, the CSI resource configuration information ("CSI-ResourceConfig") may include a CSI resource configuration information ID, CSI-RS resource set list information ("csi-RS-ResourceSetList"), a resource type ("resourceType"), and the like. The CSI-RS resource set list may include at least one of NZP CSI-RS and SSB information ("nzp-CSI-RS-SSB") for measurement and CSI-IM resource set list information ("csi-IM-ResourceSetList").

The resource type represents a behavior of a time domain of the CSI-RS resource configuration, and "aperiodic", "semi-persistent", and "periodic" can be configured. For example, the corresponding respective CSI-RS may be referred to as A-CSI-RS, SP-CSI-RS, or P-CSI-RS.

Note that, a resource for channel measurement may be used for calculation of, for example, a CQI, PMI, L1-RSRP, and the like. Furthermore, a resource for interference measurement may be used for calculation of the L1-SINR, L1-SNR, L1-RSRQ, and other indicators regarding interference.

In a case where the interference measurement is performed using CSI-IM, each CSI-RS for channel measurement may be associated with the CSI-IM resources from a resource perspective, on the basis of the CSI-RS resources in the corresponding resource set, and the order of the CSI-IM resources.

The "nzp-CSI-RS-SSB" may include NZP CSI-RS resource set list information ("nzp-CSI-RS-ResourceSetList") and SSB resource set list information for CSI measurement ("csi-SSB-ResourceSetList"). These pieces of list information correspond to one or more NZP CSI-RS resource set IDs ("NZP-CSI-RS-ResourceSetId") and CSI-SSB resource set IDs ("CSI-SSB-ResourceSetId"), and may be used for specifying resources to be measured.

The NZP CSI-RS resource set list information ("nzp-CSI-RS-ResourceSetList") may include NZP CSI-RS resource set IDs ("NZP-CSI-RS-ResourceSetId") of a maximum number ("maxNrofNZP-CSI-RS-ResourceSetsPerConfig") of NZP CSI-RS resource sets per CSI resource configuration. The maximum number ("maxNrofNZP-CSI-RS-ResourceSetsPerConfig") of NZP CSI-RS resource sets per CSI resource configuration is at most 16 in a case where the resource type is "aperiodic", and otherwise may be 1 (in a case where the resource type is "semi-persistent" or "periodic").

The SSB resource set list information for CSI measurement ("csi-SSB-ResourceSetList") may include a CSI-SSB resource set ID ("CSI-SSB-ResourceSetId") of a maximum number ("maxNrofCSI-SSB-ResourceSetsPerConfig") of SSB resource sets for CSI measurement per CSI resource configuration. The maximum number ("maxNrofCSI-SSB-ResourceSetsPerConfig") of SSB resource sets for CSI measurement per CSI resource configuration may be 1.

The CSI-IM resource set list information ("csi-IM-ResourceSetList") may include a CSI-IM resource set ID ("CSI-IM-ResourceSetId") of the maximum number ("maxNrofCSI-IM-ResourceSetsPerConfig") of CSI-IM resource sets per CSI resource configuration. The maximum number ("maxNrofCSI-IM-ResourceSetsPerConfig") of CSI-IM resource sets per CSI resource configuration is at most 16 in a case where the resource type is "aperiodic", and otherwise may be 1.

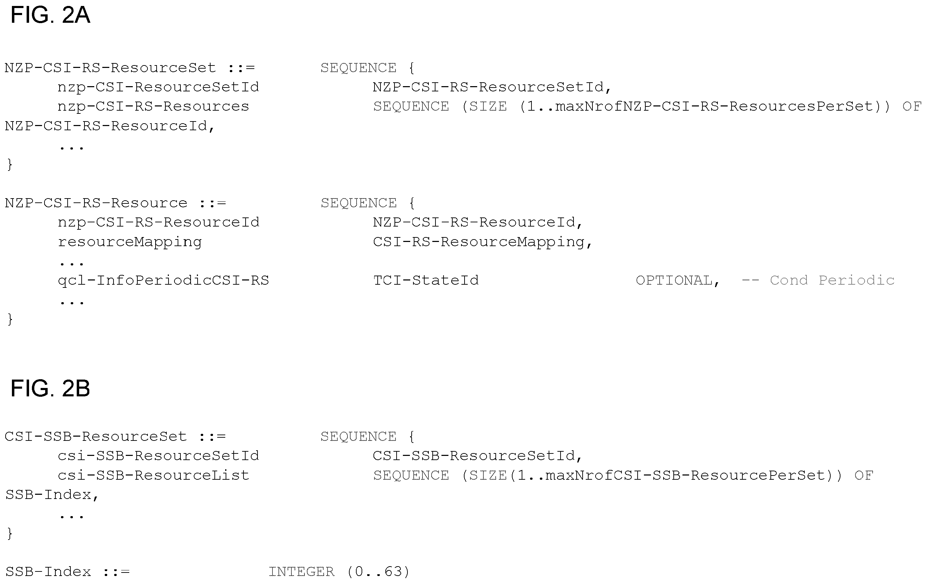

Figs. 2A and 2B are diagrams illustrating an example of RRC information elements regarding an NZP CSI-RS resource set and a CSI-SSB resource set.

As illustrated in Fig. 2A, the NZP CSI-RS resource set information ("NZP-CSI-RS-ResourceSet") includes the NZP CSI-RS resource set ID and one or more NZP CSI-RS resource IDs ("NZP-CSI-RS-ResourceId").

NZP CSI-RS resource information ("NZP-CSI-RS-Resource") may include the NZP CSI-RS resource ID and an ID ("TCI-stateId") of a Transmission Configuration Indication state. The TCI states will be described subsequently.

As illustrated in Fig. 2B, CSI-SSB resource set information ("CSI-SSB-ResourceSet") includes the CSI-SSB resource set ID and one or more pieces of SSB index information ("SSB-Index"). The SSB index information is, for example, an integer from 0 to 63, and may be used for identifying the SSB in an SS burst.

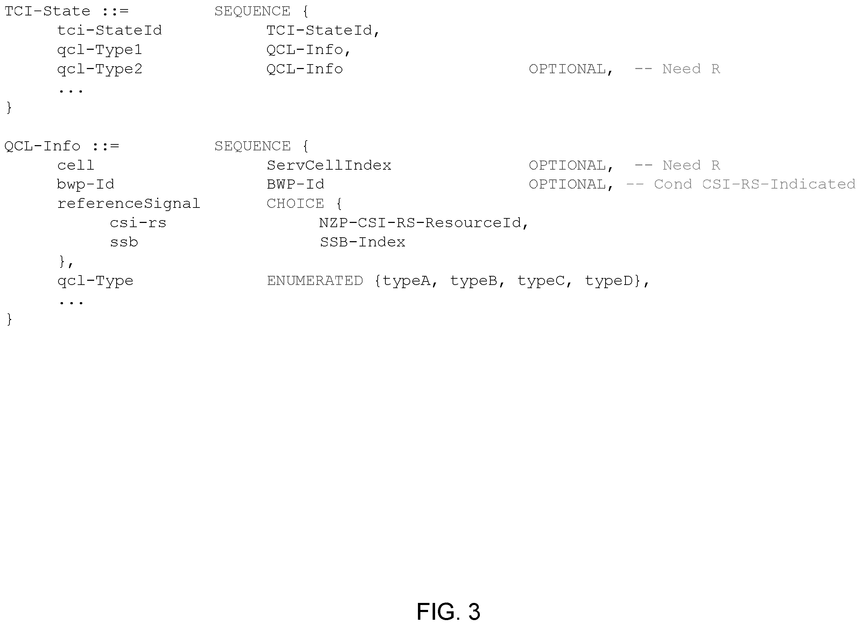

Fig. 3 is a diagram illustrating an example of an RRC information element regarding a TCI state.

The TCI state is information regarding Quasi-Co-Location (QCL) of a channel or a signal, and may also be referred to as a spatial reception parameter, spatial relation info, or the like. The TCI state may be configured or specified for the UE per channel or per signal.

As illustrated in Fig. 3, the TCI state information ("TCI-State") may include a TCI state ID and one or more pieces of QCL information ("QCL-Info"). The QCL information may include information regarding a reference signal of a QCL source (RS-related information ("referenceSignal")) and/or information indicating a QCL type (QCL type information ("qcl-Type")). The RS-related information may include information such as an RS index (for example, NZP CSI-RS resource ID, SSB index), an index of a serving cell, and an index of a bandwidth part (BWP) in which the RS is located.

For the signal and/or the channel (expressed as signal/channel), the UE may control reception processing (for example, at least one of reception, demapping, demodulation, decoding, reception beam determination, and the like), transmission processing (for example, at least one of transmission, mapping, modulation, encoding, Tx beam determination, and the like), and so on, on the basis of the TCI state corresponding to the TCI state ID associated with the signal/channel.

As illustrated in Fig 2A, for a P-CSI-RS, a related TCI state may be configured by RRC. Note that for the P-CSI-RS, the SP-CSI-RS, and the A-CSI-RS, the related TCI state may be discriminated on the basis of higher layer signaling, physical layer signaling, or a combination thereof.

### (Beam Management)

In Rel. 15 NR, the Beam Management (BM) method has been studied. In beam management, beam selection is performed based on the L1-RSRP reported by the UE. Changing (switching) a beam of a certain signal/channel may correspond to changing a TCI state and/or a QCL assumption of the signal/channel.

The UE may report (transmit) a measurement result for beam management by using a Physical Uplink Control Channel (PUCCH) or a Physical Uplink Shared Channel (PUSCH). The measurement results may be, for example, CSI including at least one of the L1-RSRP, L1-RSRQ, L1-SINR, L1-SNR, and the like.

The measurement results (for example, CSI) reported for beam management may be referred to as the beam measurement, the beam measurement report, the beam report, the beam report CSI, or the like.

The CSI measurement for the beam report may include interference measurement. The UE may measure channel quality, interference, and the like by using a resource for CSI measurement, and thus derive the beam report.

The beam report may include the results of channel quality measurement and/or interference measurement. The results of the channel quality measurement may include, for example, the L1-RSRP. The interference measurement results may include the L1-SINR, L1-SNR, L1-RSRQ, and other interference-related indicators (for example, any indicator other than L1-RSRP).

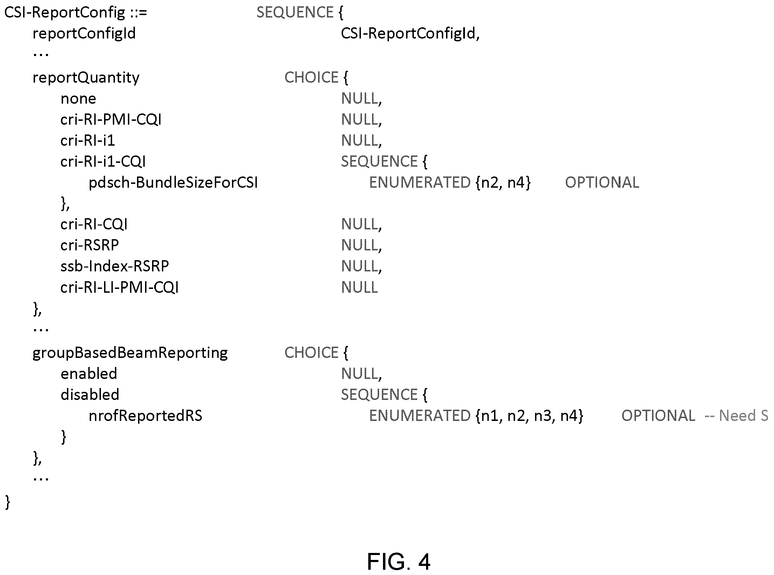

CSI report configuration information considering current NR beam management will be described with reference to Fig. 4. Fig. 4 is an excerpt of the RRC information element "CSI-ReportConfig". Fig. 4 is an excerpt of another part of the same CSI report configuration information (CSI-ReportConfig) as that in Fig. 1A.

The CSI report configuration information may include a "report quantity" (that may be represented by an RRC parameter "reportQuantity"), which is parameter information to be reported in one report instance (for example, one CSI). The report quantity is defined by a type of ASN.1 object called "selection type (choice)". Therefore, one of the parameters (cri-RSRP, ssb-Index-RSRP, and the like) defined as the report quantity is configured.

The UE in which the higher layer parameter (for example, the RRC parameter "groupBasedBeamReporting" for group-based beam reporting) included in the CSI report configuration information is configured as disabled may include in the beam report (one report instance), for each report setting, beam measurement resource IDs (for example, SSBRI, CRI) having different numbers of higher layer parameters (for example, the RRC parameter "nrofReportedRS" indicating the number of reported RS) included in the CSI report configuration information and measurement results (for example, L1-RSRP) corresponding to the respective IDs.

The UE in which groupBasedBeamReporting is configured as enabled may include in the beam report, for each report setting, two different beam measurement resource IDs and two measurement results (for example, L1-RSRP) corresponding to the respective IDs. In other words, the UE in which groupBasedBeamReporting is configured as enabled divides the DL-RS (for example, CSI-RS) into two groups and reports the ID and the measurement value for the higher RS in each group. Note that the two beam measurement resources (the CSI-RS resource and SSB resource) may be simultaneously received by the UE by using one spatial domain receive filter or may be simultaneously received by the UE by using a plurality of simultaneous spatial domain receive filters.

Furthermore, the NZP CSI-RS resource set information illustrated in Fig. 2A may include information regarding repetition in a resource in the resource set. The information regarding the repetition may indicate, for example, 'on' or 'off' . Note that 'on' may be expressed as 'enabled' or 'valid', and `off' may be expressed as 'disabled' or 'invalid'.

For example, for a resource set for which repetition is configured to be 'on', the UE may assume that a resource in the resource set has been transmitted using the same downlink spatial domain transmission filter. In this case, the UE may assume that the resource in the resource set has been transmitted using the same beam (for example, from the same base station using the same beam).

For a resource set for which repetition is configured to be 'off', the UE may perform control such that the UE should not assume (or may not assume) that the resource in the resource set has been transmitted using the same downlink spatial domain transmission filter. In this case, the UE may assume that the resources in the resource set are not transmitted using the same beam (transmitted using different beams). In other words, the UE may assume that the base station performs beam sweeping for a resource set for which repetition is configured as 'off'.

In Rel. 15 NR, cri-RSRP and ssb-Index-RSRP among the report quantities relate to beam management. The UE in which the cri-RSRP is configured as the report quantity reports the CRI and the L1-RSRP corresponding to the CRI. The UE in which the ssb-Index-RSRP is configured as the report quantity reports the SSBRI and the L1-RSRP corresponding to the SSBRI.

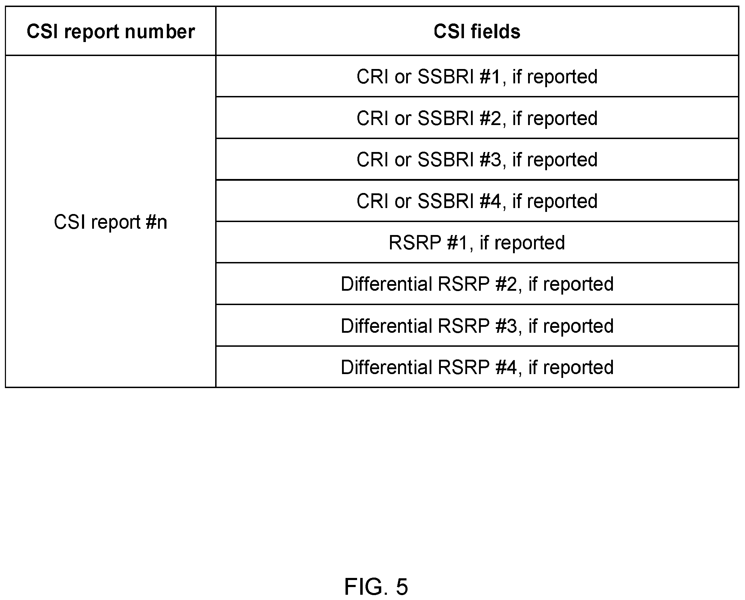

Fig. 5 is a diagram illustrating an example of a CSI report in Rel. 15 NR. Fig. 5 illustrates a mapping order of CSI fields included in one CSI report (nth CSI report #n) for CSI/RSRP or SSBRI/RSRP reporting as defined in Rel. 15.

The CSI report of Fig 5 may include one or more sets of CRI/SSBRI and RSRP. The number of these sets may be configured by a higher layer parameter (for example, the RRC parameter "nrofReportedRS") indicating the number of reference signal resources to be reported.

For L1-RSRP reporting, in a case where nrofReportedRS is configured to be 1 (the value is `n1'), RSRP #1, which is a field of a predetermined number of bits (for example, m bits) indicating the L1-RSRP of the largest measurement value, is included in the CSI report. In Rel. 15 NR, m=7.

For L1-RSRP reporting, in a case where nrofReportedRS is configured to be larger than 1, or groupBasedBeamReporting is configured as enabled, the UE uses differential L1-RSRP-based reporting. Specifically, the UE includes, in the same CSI report (reporting instance), RSRP #1 indicating the L1-RSRP having the largest measurement value, and a differential RSRP #k calculated (as a difference from the measurement value, for example) by referring to the largest measurement value for the L1-RSRP having the k-th largest (in Fig. 5, k = 2, 3, and 4) measurement value. Here, the differential RSRP #k may be a field of bits with the number (for example, n bits) smaller than the predetermined number. In Rel. 15 NR, n=4.

For example, for each group, 7 bits of the absolute RSRP value for the first beam (range from -140 to -44 dBm using 1 dB step size) and 4 bits of the difference RSRP value for the second beam are reported.

Note that, in a case where groupBasedBeamReporting is configured as enabled, the UE includes RSRP #1 and differential RSRP #2 in the same CSI report.

The CRI/SSBRI #k in Fig. 5 is a field indicating the RSRP #k or the CRI/SSBRI corresponding to the differential RSRP #k (included in a case where the RSRP #k or the differential RSRP #k is reported).

Note that, in the NR of Rel. 16 and subsequent releases, nrofReportedRS may be a value of 4 or more, or may be 4 or more. The CSI report may include four or more sets of CRI/SSBRI and RSRP. The above m and n are not limited to 7 and 4, respectively.

In addition, in the NR of Rel. 16 and subsequent releases, the L1-SINR reporting may be performed. For the L1-SINR reporting, content obtained by replacing RSRP in the L1-RSRP report described above with SINR may be applied. Note that, in this case, the configuration/parameter for the SINR may be different from the configuration/parameter for the RSRP, and, for example, the nrofReportedRS is interchangeable with nrofReportedRSForSINR, which indicates the number of reference signal resources subjected to SINR reporting.

For L1-RSRP computation, the UE may be configured with CSI-RS resource settings for a maximum of 16 CSI-RS resource sets, including a maximum of 64 resources in each resource set. The total number of different CSI-RS resources across all resource sets may be 128 or less.

For L1-SINR computation, in channel measurement, the UE may be configured with CSI-RS resource settings for a maximum of 16 CSI-RS resource sets including a maximum of 64 CSI-RS resources or a maximum of 64 SS/PBCH blocks in total.

In a case where one resource setting linked to CSI-ReportConfig has a plurality of aperiodic resource sets for a UE for which the information of the CSI aperiodic trigger state list (higher layer parameter "CSI-AperiodicTriggerStateList") is configured, only one of the aperiodic CSI-RS resources of that resource setting may be associated with the trigger state. At this time, the UE may be configured using the higher layer according to each resource setting for each trigger state so as to select one CSI-IM/NZP CSI-RS resource set from the resource settings.

The UE may not assume (or expect) that more than 64 NZP CSI-RS resources and/or a SS/PBCH block resources have been configured in the channel measurement resource setting of CSI-ReportConfig for which the report quantity (higher layer parameter reportQuantity) is configured as "none", "cri-RI-CQI", "cri-RSRP", "ssb-Index-RSRP", "cri-SINR", or "ssb-Index-SINR".

In a case where CSI-ReportConfig having a report quantity (higher layer parameter reportQuantity) configured as "cri-RSRP", "cri-SINR", or "none" is configured for the UE, and the CSI-ReportConfig links to a resource setting with a higher layer parameter resourceType configured as "aperiodic", the UE may not assume that more than 16 CSI-RS resources are configured in a CSI-RS resource set included in the resource setting.

In a case where CSI-ReportConfig, for which the report quantity (higher layer parameter reportQuantity) is configured as "cri-RSRP", "cri-RI-PMI-CQI", "cri-RI-i1", "cri-RI-i1-CQI", "cri-RI-CQI", "cri-RI-LI-PMI-CQI", or "cri-SINR", is configured for the UE and two or more resources for channel measurement are configured in the corresponding resource set, the UE may derive a CSI parameter other than the CRI, which is conditional upon the reported CRI. Here, CRI k(k≥0) may correspond to the configured (k+1)th entry of related nzp-CSI-RS-Resources in the corresponding NZP-CSI-RS-ResourceSet for channel measurement and the (k+1)th entry of related csi-IM-Resource in the csi-IM-ResourceSet or the (k+1)th entry of related nzp-CSI-RS-Resources in the corresponding NZP-CSI-RS-ResourceSet for interference measurement (when reportQuantity is configured as "cri-SINR" in CSI-ReportConfig). In a case where two CSI-RS resources are configured, each resource may include a maximum of 16 CSI-RS ports. In a case where from three to eight CSI-RS resources are configured, each resource may include a maximum of eight CSI-RS ports.

In a case where CSI-ReportConfig having a report quantity (higher layer parameter reportQuantity) configured as "ssb-Index-RSRP" is configured for the UE, the SSBRI may be reported. Here, SSBRI k(k≥0) may correspond to the (k+1)th entry configured in a related csi-SSB-ResourceList in a corresponding CSI-SSB-ResourceSet.

In a case where CSI-ReportConfig having a report quantity (higher layer parameter reportQuantity) configured as "ssb-Index-SINR" is configured for the UE, the L1-SINR, which is conditional upon the reported SSBRI, may be derived. Here, SSBRI k(k≥0) may correspond to the configured (k+1)th entry of the related csi-SSB-ResourceList in the corresponding CSI-SSB-ResourceSet for channel measurement and the (k+1)th entry of the related csi-IM-Resource in the csi-IM-ResourceSet or the (k+1)th entry of the related nzp-CSI-RS-Resources in the corresponding NZP-CSI-RS-ResourceSet for interference measurement.

### (Extended Group-based Beam Reporting)

In preparation for a future radio communication system (for example, Rel. 17 and subsequent releases), beam management-related extensions (may be referred to as beam reporting suitable for a plurality of TRPs, or extended group-based beam reporting, for example) for a user terminal (user terminal, User Equipment (UE)) having a plurality of panels (multi-panels), a plurality of transmission/reception points (TRP), and the like are under study.

Because the above-described groupBasedBeamReporting enables reporting in one report for two groups, same is suitable in cases where multi-TRP transmission, multi-panel reception, and the like, are applied. For example, same can be used in order to report the best beam of TRP1 as RSRP #1 and the best beam of TRP2 as the differential RSRP #2.

As noted above, in Rel. 15 and 16, a UE for which group-based beam reporting is enabled can only report two different CRI/SSBRI (which is interchangeable with beam index) for each report setting. Therefore, in preparation for Rel. 17, configuring the number of groups that can be reported through group-based beam reporting to be larger than 2 is under study. In addition, for more flexible reporting, a configuration enabling the reporting of two or more CRIs/SSBRIs in a group has also been studied.

Such group-based beam reporting using such a beam report (a beam report in which the number of groups pertaining to the report is greater than two, or two or more CRI/SSBRIs are reported in the group pertaining to the report) may be referred to as a multiple group-based beam, enhanced group-based beam reporting, Rel. 17 group-based beam reporting, and the like (hereinafter referred to as multiple group-based beam reporting).

For the situation of operating multiple group-based beam reporting, the following two modes are conceivable:
- Mode 1: The UE may simultaneously receive a plurality of beams that each belong to different groups.
- Mode 2: The UE may simultaneously receive a plurality of beams belonging to the same group.

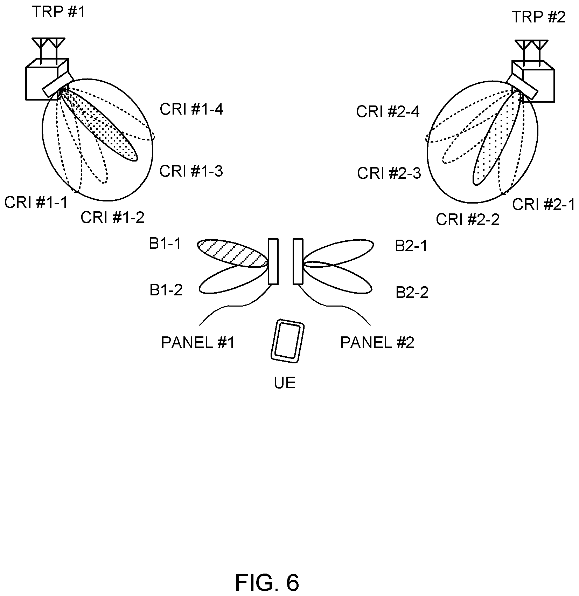

Hereinafter, a situation where multiple group-based beam reporting is operated will be described using the environment of Fig. 6 as an example. Fig. 6 is a diagram illustrating an example of a beam usage environment assumed for multiple group-based beam reporting.

In Fig. 6, the UE measures resources of reference signals (CSI-RS) transmitted from two TRPs (TRPs #1 and #2). The UE has two panels (PANEL #1, #2), and each panel may form a different beam (B1-1, B1-2, B2-1, B2-2).

TRP #1 transmits the CSI-RS by using the resources CRI #1-1 to CRI #1-4 corresponding to different beams, respectively. TRP #2 transmits the CSI-RS by using the resources CRI #2-1 to CRI #2-4 corresponding to different beams, respectively. In the present disclosure, the beams of CRI # 1-1 to CRI # 1-4 are interchangeable with Tx beams #1 to #4, respectively. In the present disclosure, the beams of CRI # 2-1 to CRI # 2-4 are interchangeable with Tx beams #5 to #8, respectively.

Note that each TRP and UE may perform transmission and reception by sweeping each beam (using different times/frequencies), or may perform transmission and reception by simultaneously using several beams.

Note that Fig. 6 is an example and, for example, TRPs #1 and #2 are interchangeable with two panels (panels #1, #2) of a certain TRP.

The RSRPs/SINRs corresponding to CRI #1-1 to CRI #1-4 may be denoted as RSRP/SINR #1-1 to RSRP/SINR #1-4, respectively. The RSRP/SINRs corresponding to CRI #2-1 to CRI #2-4 may be denoted as RSRP/SINR #2-1 to RSRP/SINR #2-4, respectively.

In addition, hereinafter, a resource corresponding to a certain CRI may be simply referred to as a certain CRI (for example, CRI # 1-1 may mean CRI # 1-1, or may mean a resource corresponding to CRI # 1-1).

In the present disclosure, it is assumed in the description that one resource configuration (which may be referred to as a reference signal (RS) configuration) corresponds to (is associated with) one TRP. A resource configuration corresponding to one TRP may correspond to, for example, at least one of CSI resource configuration information ("CSI-ResourceConfig"), a CSI-RS resource set list, an NZP CSI-RS resource set, and a CSI-SSB resource set.

For example, in Fig. 6, RRC configuration may be performed as follows. The CSI report configuration #0 configured for the UE includes CSI resource configurations #0 and #1. CSI resource setting #0 relates to resource set #0 (CSI-RS resource set #0), and four CSI-RS resources corresponding to CRI #1-1 to CRI #1-4 are configured in resource set #0. CSI resource setting #1 relates to resource set #1 (CSI-RS resource set #1), and four CSI-RS resources corresponding to CRI #2-1 to CRI #2-4 are configured in resource set #1.

Note that, even in a case where one resource configuration corresponds to (is associated with) a plurality of TRPs, the content of the present disclosure may be applied.

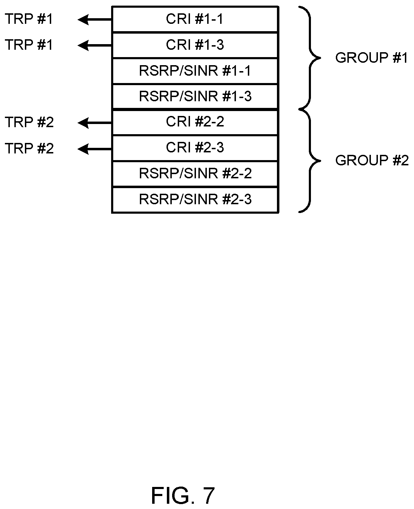

Fig. 7 is a diagram illustrating an example of a mode 1 CSI report of multiple group-based beam reporting. In the example illustrated in Fig. 7, the UE selects beams from two TRPs #1 measured using panel #1, and selects beams from two TRPs #2 measured using panel #2. Note that, in this example, the UE assumes that panel #1 is related to group #1 and panel #2 is related to group #2.

Hereinafter, the numbers of each element in the configuration of the CRI measurement results and the CSI report in the drawings of the present disclosure are merely an example, and the numbers are not limited thereto.

In this case, the UE determines CRI #1-1 and CRI #1-3 as the reporting targets among the CRIs of CSI resource configuration #0 related to the TRPs #1 for group #1 (panel #1). Further, the UE determines CRI #2-2 and CRI #2-3 as the reporting targets among the CRIs of CSI resource configuration #1 related to TRP #2 for group #2 (panel #2).

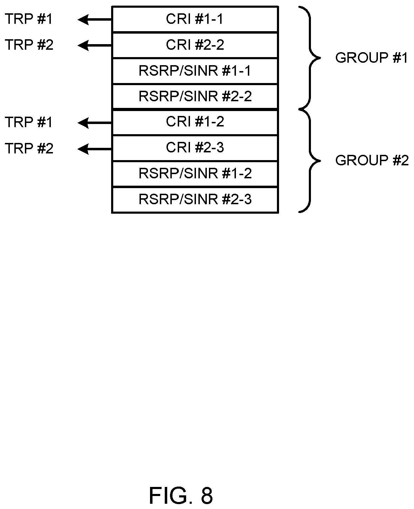

Fig. 8 is a diagram illustrating an example of a mode 2 CSI report of multiple group-based beam reporting. In the example illustrated in Fig. 8, the UE selects a beam from one TRP measured using panel #1, and a beam from another TRP measured using panel #2.

In this case, for group #1, the UE selects CRI #1-1 as a reporting target from among the CRIs corresponding to the TRPs #1 in reception panel #1, and selects CRI #2-2 as a reporting target from among the TRPs #2, which are different from the TRPs #1 in reception panel #2. In this case, for group #2, the UE selects CRI #2-3 as a reporting target from among the CRIs corresponding to the TRPs #2 in reception panel #1, and selects CRI #1-2 as a reporting target from among the TRPs #1, which are different from the TRPs #2 in reception panel #2.

One of the above mode 1 and mode 2 may be supported by the UE, or both may be supported.

### (Analysis)

The beam measurement/reporting may be according to at least one of Options 1 to 3 hereinbelow. This beam measurement/reporting may be used for inter-TRP beam pairing. Here, Option 1 corresponds to mode 1, and Option 2 corresponds to mode 2.

### [Option 1]

In CSI reporting, the UE may report N(N>1) pairs/groups and M(M>=1) beams per pair/group. Different beams in different pairs/groups may be received simultaneously.

### [Option 2]

In CSI reporting, the UE may report N(N>=1) pairs/groups and M(M>1) beams per pair/group. Different beams in one pair/group may be received simultaneously.

### [Option 3]

The UE may report M(M>=1) beams in N(N>1) CSI reports corresponding to N(N>1) reporting settings. Different beams corresponding to different CSI reports may be received simultaneously.

In addition, in Rel. 17 and subsequent releases, configuring a set/subset of a plurality of (for example, two) CMR for each resource setting of periodic/semi-persistent CMR is being studied. That is, configuring a plurality of (for example, two) CMR resource sets for a plurality of (for example, two) TRPs for group-based beam reporting, for each resource setting of periodic/semi-persistent CMR, is being studied.

Further, in Rel. 17 and subsequent releases, determining the bit-width of each SSBRI/CRI on the basis of the number of SSB/CSI-RS resources in an associated CMR resource set is under study. That is, the bit-width of the beam ID being based on the number of beams in each resource set is being studied.

In the multiple group-based beam reporting as described above, studies have been insufficient regarding how to configure a CSI report, specifically, how to determine the reporting target (beam/beam group/beam pair/panel) in each group. If clarification is not provided, the communication throughput may decrease.

Specifically, for example, for each RS/RS set configuration/TRP, studies have been insufficient regarding how to determine (select) a panel for measurement/perform ordering.

More specifically, studies have been insufficient regarding whether the same beam can be selected/reported in a plurality of beam groups/pairs. For example, for two beam groups/pairs, studies have been insufficient regarding whether the combination of a first beam from a first (resource) set and a first beam from a second set (group/pair) and the combination of the first beam from the first set and a third beam from the second set are reportable (in this case, the "same beam" is the first beam from the first (resource) set).

In addition, because the beam index (SSBRI/CRI) is indexed for each CMR set (in a case where set sizes are the same, this means that the index ranges of the two sets are the same; in a case where set sizes are different, this means that the index ranges of the two sets overlap), studies have been insufficient regarding how to establish common understanding for the ordering of N beam groups in a CSI report and the quantization bit-width in differential reporting.

Note that the CMR set may be configured for group-based beam reporting and/or CSI reporting, the first CMR set may include K1 CMRs, and the second CMR set may include K2 CMRs. K1+K2=Ks.

The UE may be configured, using RRC signaling, with one or more pieces of CMR set configuration information. One piece of CMR set configuration information may include information indicating a CMR included in one CMR set (in other words, may correspond to one TRP), or may include information indicating a CMR included in each of a plurality of CMR sets (in other words, may correspond to a plurality of TRPs).

The UE may be configured, using RRC signaling, with information regarding which CMR set the CMR belongs to. In this case, the UE is capable of discriminating the CMR included in the CMR set even without the CMR set configuration information as described above.

Note that K1 and K2 may have the same value or different values. The two CMR sets may respectively correspond to two TRPs of multi-TRPs, or one may correspond to a multi-TRP and the other may correspond to a single TRP.

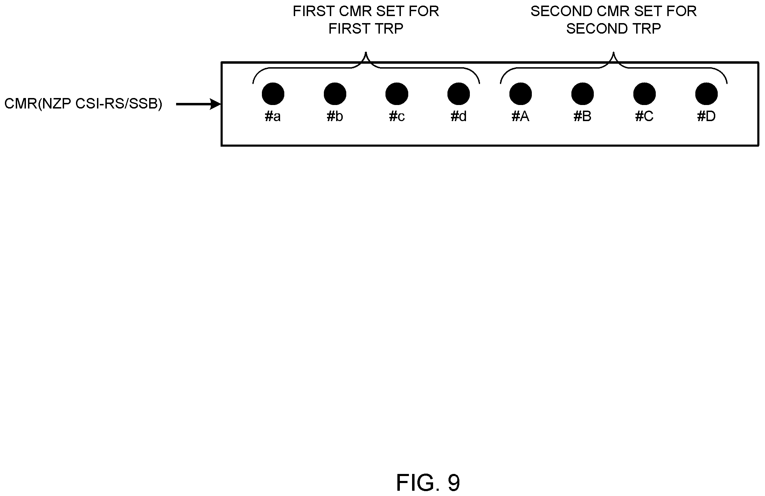

Fig. 9 is a diagram illustrating an example of CMR configuration. In the example illustrated in Fig. 9, CMR indexes (#a to #d, #A to #D) are assigned to each of a plurality of CMRs (for example, NZP CSI-RS/SSB).

In the example illustrated in Fig. 9, for example, a case is considered in which the CMRs of the CMR indexes #a to #d are configured as the first CMR for the first TRP, and the CMRs of the CMR indexes #A to #D are configured as the second CMR set for the second TRP. In this case, in the above examination of the foregoing Rel. 17 and subsequent releases, the bit-width of each beam ID (CMR index) may be 2 bits, but the size of the set may be different at each TRP (in other words, the bit-width indicating the CMR index in the first CMR set and the bit-width indicating the CMR index in the second CMR set may be different).

In the example illustrated in Fig. 9, the first set of CMR #a to #d may be re-indexed as SSBRI/CRI #0 to #3 in the reporting. Re-indexing the second set of CMR #A to #D as SSBRI/CRI #0 to #3 in the reporting may also be considered.

In such a case, studies have been insufficient regarding how to distinguish beams (SSB/CSI-RS) having the same index in the first set and the second set, in the CSI report. In addition, studies have been insufficient regarding which beam is indicated (or selected/determined) as the beam having the maximum value of L1-RSRP/L1-SINR (beams reported using, for example, quantization of a predetermined number (for example, 7) of bits).

Therefore, the present inventors have conceived of a preferred CSI report configuration method for multiple group-based beam reporting.

Hereinafter, embodiments according to the present disclosure will be described in detail with reference to the drawings. The radio communication methods according to the embodiments may each be applied alone or in combination.

In the present disclosure, "A/B" and "A and/or B" may be interchangeable. In the present disclosure, "A/B/C" and "at least one of A, B and C" are interchangeable.

In the present disclosure, cell, serving cell, CC, carrier, BWP, DL BWP, UL BWP, active DL BWP, active UL BWP, and band are interchangeable.

In the present disclosure, index, ID, indicator, and resource ID are interchangeable.

In the present disclosure, "support", "control", "controllable", "operate", and "operable" are interchangeable.

Note that, in the present disclosure, a panel (reception panel), an Uplink (UL) transmission entity, a TRP, a spatial relation, a control resource set (COntrol REsource SET(CORESET), a PDSCH, a codeword, a base station, an antenna port (for example, a DeModulation Reference Signal (DMRS) port), an antenna port group (for example, a DMRS port group), a group (for example, a Code Division Multiplexing (CDM)) group, a reference signal group, a CORESET group, and a CORESET pool), a reference signal configuration, a reference signal set configuration, and the like are interchangeable.

Further, the panel identifier (ID) and the panel are interchangeable. The TRP ID and the TRP are interchangeable.

Note that, in the present disclosure, group, set, cluster, panel, (reported) beam-related group, and so on, are interchangeable.

In the following embodiments, the beam index/beam ID is interchangeable with, for example, CRI/SSBRI. In addition, the RSRP/SINR are interchangeable with arbitrary beam-related measurement results.

Further, a CSI-RS-related name is interchangeable with a corresponding SSB-related name. For example, CSI-RS resource is interchangeable with SSB resource. In other words, CSI-RS is interchangeable with CSI-RS/SSB, and CRI is interchangeable with CRI/SSBRI.

Furthermore, in the present disclosure, "reception panel" may correspond to at least one of RS group, TRP index, CORESET pool index, RS group configured for group-based beam reporting, TCI state (or TCI) group, QCL assumption (or QCL) group, and beam group.

Further, in the present disclosure, "in the same location" is interchangeable with "the same i-th", "corresponding to the same TRP", and so on. Note that, in the present disclosure, "i-th" may mean inclusion in an i-th location in a certain CSI report, or may mean inclusion in the i-th position in a certain group of certain CSI reports.

In the present disclosure, "set", "CMR set", "CMR resource set", and so on are interchangeable. Further, in the present disclosure, "SSBRI/CRI" and "CMR index" are interchangeable. Further, in the present disclosure, "RSRP/SINR" is interchangeable with "L1-RSRP/L1-SINR/L3-RSRP/L3-SINR". Note that L3 may mean Layer 3.

### (Radio Communication Method)

### <First Embodiment>

In the first embodiment, reporting of the same beam in one or more beam groups/pairs will be described.

The UE may follow at least one of Embodiments 1-1 and 1-2 hereinbelow when higher layer parameters relating to group-based beam reporting (for example, groupBasedBeamReporting-r17) are configured as enabled and configured to report N beam groups/pairs for one CSI report. The UE may also follow at least one of Embodiments 1-1 and 1-2 hereinbelow when higher layer parameters relating to group-based beam reporting (for example, groupBasedBeamReporting-r17) are configured as enabled and are configured to report N beam groups/pairs for one CSI report, and configured to select M(M<=N) beam groups/pairs to be reported.

### <<Embodiment 1-1>>

The UE may report one SSBRI/CRI from one set by using one beam group/pair.

The UE may not report the same beam (SSBRI/CRI) in one or more beam groups/pairs. For example, when reporting, in a first beam group, a first SSBRI/CRI (for example, CRI #0) of a first CMR set, the UE may be controlled not to report, in a second beam group, the first SSBRI/CRI of the first CMR set (in other words, the second beam group includes only reporting regarding CMRs corresponding to other SSBRI/CRIs).

### <<Embodiment 1-2>>

The UE may report one SSBRI/CRI from one set by using one or more beam groups/pairs.

For SSBRI/CRI reported in a plurality of (for example, two) beam groups/pairs, the measured L1-SINR values may be different. For (identical) SSBRI/CRI reported in a plurality of (for example, two) beam groups/pairs, the measured L1-RSRP values may be the same or may be different.

Note that, for Embodiments 1 and 2, the UE may report one SSBRI/CRI from one set in up to a maximum of X beam groups/pairs. For example, if X = 2, the UE may report the same SSBRI/CRI for the same set in up to two beam groups, but determines that reporting the same SSBRI/CRI for the same set in three or more beam groups is not allowed. Note that the value of X may be specified in advance using a specification, may be configured in the UE using higher layer signaling (for example, RRC signaling/MAC CE), or may be configured based on UE capability (reporting of UE capability information).

The application of Embodiment 1-1 or Embodiment 1-2 described above may be specified in advance in a specification, may be configured in the UE by using higher layer signaling (for example, RRC signaling/MAC CE), or may be configured based on UE capability (reporting of UE capability information).

Application of Embodiment 1-1 or Embodiment 1-2 described above may be configured on the basis of a measurement/report target (for example, L1-RSRP/L1-SINR) or may be configured on the basis of a carrier frequency (for example, a specific frequency range (for example, FR1/FR2)).

According to the foregoing first embodiment, it is possible to appropriately determine whether to report the same beam in one or more beam groups/pairs.

### <Second Embodiment>

In a second embodiment, the ordering of a plurality of beams (and corresponding L1(/L3)-RSRP/L1(/L3)-SINR) in one beam group/pair will be described.

Note that, although an example with two beam groups/pairs, two beams, and RSRP/SINR is described hereinbelow, these quantities are not limited. Even in a case where the number of beam groups, the number of RSRP/SINR, and the like included in a CSI report are each a number other than two (arbitrary integers), a person skilled in the art can understand that the embodiments of the present disclosure can be applied interchangeably as appropriate.

The second embodiment is roughly divided into Embodiment 2-1 and Embodiment 2-2.

### <<Embodiment 2-1>>

The ordering of a plurality of beams in one beam group/pair may be determined on the basis of the number of the CMR resource set.

For example, the SSBRI/CRI of a resource set (which may be referred to as a CMR set) of a first CMR may be determined as the first beam, and then the SSBRI/CRI of a resource set of a second CMR may be determined as the second beam. Note that the number of the CMR set may be the index of the CMR set configured in association with the CMR by means of an RRC parameter, or may be indicated by an entry of any given number of the configured CMR set.

In this embodiment, the first RSRP/SINR value does not need to indicate the maximum value among the two beams. In other words, the second RSRP/SINR value in the group may be the maximum value among the two beams.

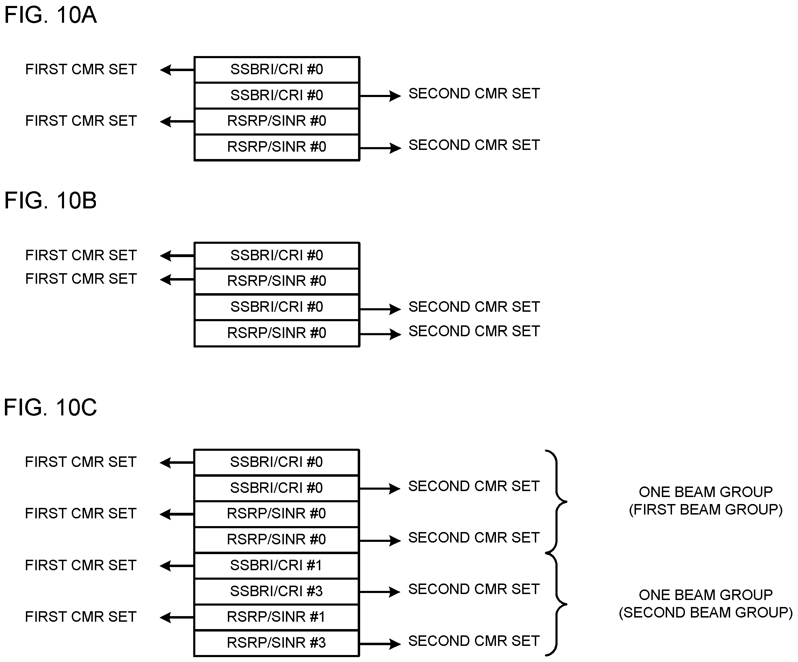

Fig. 10A is a diagram illustrating an example of ordering of one beam group/pair according to Embodiment 2-1. As illustrated in Fig. 10A, for beam reporting of one beam group/pair by the UE, beam reporting may be derived (generated) in the following order: the first CMR(SSBRI/CRI #0) of the first CMR set, the second CMR(SSBRI/CRI #0) of the second CMR set, the first RSRP/SINR(RSRP/SINR #0) corresponding to the first CMR of the first CMR set, and then the second RSRP/SINR(RSRP/SINR #0) corresponding to the second CMR of the second CMR set.

Fig. 10B is a diagram illustrating another example of ordering of one beam group/pair according to Embodiment 2-1. As illustrated in Fig 10B, for beam reporting of one beam group/pair by the UE, beam reporting may be derived in the following order: the first CMR(SSBRI/CRI #0) of the first CMR set, the first RSRP/SINR(RSRP/SINR #0) corresponding to the first CMR of the first CMR set, the second CMR(SSBRI/CRI #0) of the second CMR set, and then the second RSRP/SINR(RSRP/SINR #0) corresponding to the second CMR of the second CMR set.

Fig. 10C is a diagram illustrating an example of ordering of two beam groups/pairs according to Embodiment 2-1. As illustrated in Fig. 10C, beam reporting of two beam groups/pairs by the UE may be derived. For the first beam group/pair included in the beam reporting, beam reporting may be derived in the following order: the first CMR(SSBRI/CRI #0) of the first CMR set, the second CMR(SSBRI/CRI #0) of the second CMR set, the first RSRP/SINR(RSRP/SINR #0) corresponding to the first CMR of the first CMR set, and then the second RSRP/SINR(RSRP/SINR #0) corresponding to the second CMR of the second CMR set. Thereafter, for the second beam group/pair included in the beam reporting, beam reporting may be derived in the following order: the first CMR(SSBRI/CRI #1) of the first CMR set, the second CMR(SSBRI/CRI #3) of the second CMR set, the first RSRP/SINR(RSRP/SINR #1) corresponding to the first CMR of the first CMR set, and the second RSRP/SINR(RSRP/SINR #3) corresponding to the second CMR of the second CMR set.

In the example illustrated in Fig. 10C, the ordering for one beam group/pair corresponds to Fig. 10A above, but may correspond to Fig. 10B.

In the case of beam reporting as illustrated in Fig. 10C, even if the ordering of the N beam groups/pairs follows the highest/second measurement results of each group and/or the average/total measurement results of each group, the RSRP/SINR value of the first beam (SSBRI/CRI) is not necessarily the maximum value, and it is conceivable that 7-bit quantization cannot be performed.

For example, in a case where the ordering of the N beam groups/pairs is based on (follows) the best results of the first CMR set, the value of the first RSRP/SINR(RSRP/SINR #0) of the first beam group/pair of the first CMR set may be greater than (or equal to or greater than) the first RSRP/SINR(RSRP/SINR #1) of the second beam group/pair of the first CMR set.

Meanwhile, the value of the second RSRP/SINR(RSRP/SINR #0) of the first beam group/pair of the second CMR set is not necessarily greater than (or equal to) the second RSRP/SINR(RSRP/SINR #3) of the second beam group/pair of the second CMR set. Furthermore, the value of the first RSRP/SINR(RSRP/SINR #0) of the first beam group/pair of the first CMR set is not necessarily greater than (or equal to) the second RSRP/SINR(RSRP/SINR #0) of the first beam group/pair of the second CMR set. The same applies to a case where the ordering of the N beam groups/pairs is based on (follows) the best result of the second CMR set.

Here, the ordering of N beam groups/pairs based on (following) the best result of the foregoing CMR set will be described.

As (the measurement result of the first CMR set and the measurement result of the second CMR set), it is assumed that three measurement results, namely (-55, -58), (-60, -65), and (-62, -50), are obtained for three beam groups. In a case where the ordering of the three beam groups follows the best result of the first CMR set, the beam reporting is derived in the order of (-55, -58), (-60, -65), and (-62, -50). In a case where the ordering of the three beam groups follows the best result of the second CMR set, the beam reporting is derived in the order of (-62, -50), (-55, - 58), and (-60, -65).

Further, for example, in a case where the ordering of the N beam groups/pairs is based on (follows) the best beams in both CMR sets, then the value of the first RSRP/SINR(RSRP/SINR #0) of the first beam group/pair of the first CMR set and the second RSRP/SINR(RSRP/SINR #0) of the first beam group/pair of the second CMR set may be the maximum (best) value. Meanwhile, in this case, the value of the first RSRP/SINR(RSRP/SINR #0) of the first beam group/pair of the first CMR set is not necessarily greater than (or equal to) the second RSRP/SINR(RSRP/SINR #0) of the first beam group/pair of the second CMR set.

For example, as (the measurement result of the first CMR set and the measurement result of the second CMR set), it is assumed that three measurement results, namely (-55, -58), (-60, -65), and (-62, -50) are obtained for three beam groups. In a case where the ordering of the three beam groups follows the best result of both CMR sets, the beam reporting is derived in the order of (-62, -50), (-55, -58), and (-60, -65).

Hereinafter, quantization in Embodiment 2 -1 will be described. The UE may perform quantization according to at least one of the methods disclosed in Embodiments 2-1-1 to 2-1-6 hereinbelow.

### [Embodiment 2-1-1]

For the measurement values of the first beam for each beam group of the first CMR set (for example, RSRP/SINR #0, RSRP/SINR #1 for the first CMR in Fig. 10C), differential reporting may be applied to the first beams of beam groups other than a specific beam group.

The specific beam group may be the first beam group.

For example, the RSRP/SINR corresponding to the first beam of the first beam group in the first CMR set may be quantized to a first bit (for example, 7 bits). Further, the RSRP/SINR corresponding to the first beam of the nth (n is an integer of 2 or more) beam group in the first CMR set may be quantized into a second bit (for example, 4 bits), and may be derived as a differential value (a differential value relative to the maximum RSRP/SINR, for example, a differential value relative to the RSRP/SINR indicated by the first bit. The same applies hereafter).

### [Embodiment 2-1-2]

For the measurement values of the first beams for each beam group of the first CMR set, differential reporting does not need to be applied to the first beams of a plurality (for example, all) of the beam groups.

For example, the RSRP/SINR corresponding to the first beams of all beam groups in the first CMR set may be quantized to a first bit (for example, 7 bits).

Furthermore, for example, the RSRP/SINR corresponding to the first beams of specific (for example, the first and second) beam groups in the first CMR set may be quantized to a first bit (for example, 7 bits). The RSRP/SINR corresponding to the first beam of the other beam groups may be quantized into a second bit (for example, 4 bits) and derived as a differential value.

### [Embodiment 2-1-3]

For the measurement values of the second beam for each beam group in the second CMR set (for example, RSRP/SINR #0, RSRP/SINR #3 for the first CMR in Fig. 10C), differential reporting does not need to be applied to the second beams of a plurality (for example, all) of the beam groups.

For example, the RSRP/SINR corresponding to the second beams of all beam groups in the second CMR set may be quantized to a first bit (for example, 7 bits).

Furthermore, for example, the RSRP/SINR corresponding to the second beams of specific (for example, the first and second) beam groups in the second CMR set may be quantized to a first bit (for example, 7 bits). The RSRP/SINR corresponding to the second beam of the other beam groups may be quantized into a second bit (for example, 4 bits) and derived as a differential value.

### [Embodiment 2-1-4]

For the measurement values of the second beams for each beam group of the second CMR set, the UE may indicate the best SSBRI/CRI/CMR set index/beam group ID/beam pair (pairing) ID among the second beams of all the beam groups.

The indication may be included in the beam reporting. For example, the indication may be included in a specific location (for example, at the beginning, an initial field of a beam group, an initial field of a CSI report, or the like) of beam reporting serving as new beam reporting.

Thereafter, the RSRP/SINR corresponding to the best SSBRI/CRI/CMR set index/beam group ID/beam pair (pairing) ID may be quantized into a first bit (for example, 7 bits), and the RSRP/SINR corresponding to the other second beams may be quantized into a second bit (for example, 4 bits).

In Embodiment 2-1-4, the differential reporting for each beam group of the second CMR set is based on the difference from the measurement results of the best beams among all the beams of all beam groups in the second CMR set irrespective of the beams of the first CMR set.

### [Embodiment 2-1-5]

The UE may indicate the best SSBRI/CRI/CMR set index/beam group ID/beam pair (pairing) ID of all beams in all beam groups.

The indication may be included in the beam reporting. For example, the indication may be included in a specific location (for example, at the beginning) of beam reporting serving as a new beam report.

Thereafter, the RSRP/SINR corresponding to the best SSBRI/CRI/CMR set index/beam group ID/beam pair (pairing) ID may be quantized into a first bit (for example, 7 bits), and the RSRP/SINR corresponding to the other second beams may be quantized into a second bit (for example, 4 bits).

In Embodiment 2-1-5, the differential reporting for each beam group of each CMR set is determined as the difference from the measurement results of the best beams among all the beams of all beam groups in all CMR sets.

Note that the UE does not need to indicate which beam group is related to the best reporting result (the best SSBRI/CRI) (which beam group shows the best reporting result) (there is no need for notification in a CSI report). As described above, in a case where it is determined in which group the ordering of the N beam groups/pairs is based on (follows) the best beam, then it is self-evident which group the best reporting results fall into.

### [Embodiment 2-1-6]

The UE may indicate the best SSBRI/CRI/CMR set index/beam group ID/beam pair (pairing) ID among a specific number (for example, two) of beams of a specific beam group (for example, a first beam group).

The indication may be included in the beam reporting. For example, the indication may be included in a specific location (for example, at the beginning) of beam reporting serving as a new beam report.

For example, the indication may have a bit length of one bit. When the indication indicates a first value (for example, 0), the best beam may mean a beam of a first CMR set of the first beam group, and when the indication indicates the first value (for example, 1), the best beam may mean a beam of the second CMR set in the first beam group.

Thereafter, the RSRP/SINR corresponding to the best SSBRI/CRI/CMR set index/beam group ID/beam pair (pairing) ID may be quantized into a first bit (for example, 7 bits), and the RSRP/SINR corresponding to the other second beams may be quantized into a second bit (for example, 4 bits).

This embodiment is suitably applied in a case where the ordering of the N beam groups/pairs is based on (follows) the best beams in both CMR sets.

### <<Embodiment 2-2>>

In beam reporting, derivation and placement may be performed relative to the beam (SSBRI/CRI) corresponding to the best RSRP/SINR value. For example, within one beam reporting group, the i-th best measurement result may be placed in the i-th position.

At this time, content/fields indicating which CMR set the initial field for each beam group/pair is may be included in the beam reporting.

The content/field may indicate to which CMR set the initial beam (that is, the best beam) included in the beam group/pair corresponds. In other words, the content/field may indicate the ordering of the CMR sets within the group. For example, the content/field may have one bit.

Note that the order of the plurality of (for example, two) beams in each group may be based on (follow) the value of RSRP/SINR.

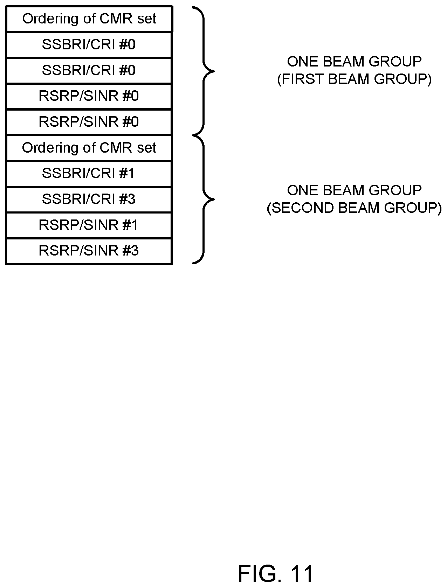

Fig. 11 is a diagram illustrating an example of beam reporting according to Embodiment 2-2. In Fig. 11, beam reporting includes measurement results corresponding to two beam groups/pairs. The beam reporting corresponding to each group includes content/a field (described as "ordering of CMR set") indicating CMR set ordering. The UE uses the content/field to indicate the best beam for which the beam included in that beam group/pair corresponds to a given CMR set.

Note that, for example, in a case where the ordering of the N beam groups/pairs follows the best beams of both CMR sets, the value of the first RSRP/SINR(RSRP/SINR #0) of the first beam group/pair of the first CMR set may be greater than (or equal to) the first RSRP/SINR (RSRP/SINR #1) of the second beam group/pair of the first CMR set. Meanwhile, in this case, the value of the second RSRP/SINR(RSRP/SINR #0) of the first beam group/pair of the second CMR set is not necessarily greater than (or equal to) the second RSRP/SINR(RSRP/SINR #3) of the second beam group/pair of the second CMR set.

Hereinafter, quantization in Embodiment 2-2 will be described. The UE may perform quantization according to at least one of the methods disclosed in Embodiments 2-2-1 to 2-2-2 hereinbelow.

### [Embodiment 2-2-1]

The first beam (for example, in Fig. 11, RSRP/SINR #0 for the first CMR) of the first beam group may be considered as the best beam of all beams.

For example, the RSRP/SINR corresponding to the best beam may be quantized to a first bit (for example, 7 bits). The RSRP/SINR corresponding to the other beams may be quantized into a second bit (for example, 4 bits) and derived as a differential value.

### [Embodiment 2-2-2]

For the first beams in each beam group, the first beams of the first beam group may be quantized to a first bit (for example, 7 bits), and the first beams of the other beam groups may be quantized to a second bit (for example, 4 bits) and derived as a differential value.

For the second beams in each beam group, the best beams among the second beams of all the beam groups may be quantized to a first bit (for example, 7 bits), and the other second beams may be quantized to a second bit (for example, 4 bits) and derived as a differential value.

The UE may include (may add), in the beam report, an indication of the SSBRI/CRI/CMR set index/beam group ID/beam pair (pairing) ID to indicate the best beam among the second beams of all the beam groups. For example, the indication may be included in a specific location (for example, at the beginning) of beam reporting serving as a new beam report.

Furthermore, for example, the RSRP/SINR corresponding to the first beams of specific (for example, the first and second) beam groups in the first CMR set may be quantized to a first bit (for example, 7 bits). The RSRP/SINR corresponding to the first beam of the other beam groups may be quantized into a second bit (for example, 4 bits) and derived as a differential value.

According to the foregoing second embodiment, it is possible to make an appropriate determination regarding the ordering of N beam groups in a CSI report and the quantization bit-width in a differential report.

### <Others>

In a case where the bit-width of each SSBRI/CRI is determined based on the number of SSB/CSI-RS resources in the two CMR resource sets, the UE does not need to distinguish which of the first CMR set and the second CMR set each SSBRI/CRI (beam ID) corresponds to.

In addition, the UE may determine the best beam as the first beam of the first beam group for the ordering of the N beam groups and the ordering within the beam groups.

At least one of the beam group ordering, the beam ordering within each group, and the quantization scheme described above may also be applied as appropriate in an intercell mobility/multiple TRP intercell mobility scenario that utilizes SSBs that may be associated with cells of different physical cell IDs.

### (Radio Communication System)

Hereinafter, a configuration of a radio communication system according to one embodiment of the present disclosure will be described. In this radio communication system, communication is performed using any of the radio communication methods according to the foregoing embodiments of the present disclosure, or a combination thereof.

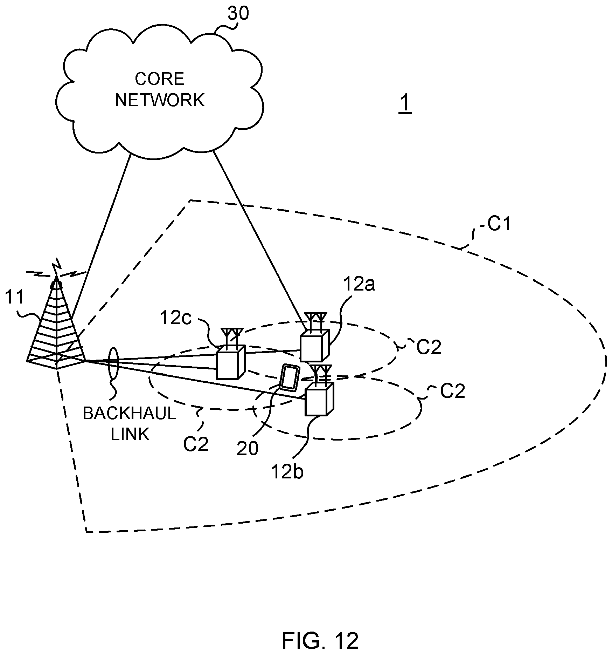

Fig. 12 is a diagram illustrating an example of a schematic configuration of a radio communication system according to one embodiment. The radio communication system 1 may be a system that implements communication by using Long Term Evolution (LTE), 5th generation mobile communication system New Radio (5G NR), and the like drafted as the specification by the Third Generation Partnership Project (3GPP).

Further, the radio communication system 1 may support dual connectivity (Multi-RAT Dual Connectivity (MR-DC)) between a plurality of Radio Access Technologies (RATs). The MR-DC may include dual connectivity between LTE (Evolved Universal Terrestrial Radio Access (E-UTRA)) and NR (E-UTRA-NR Dual Connectivity (EN-DC)), dual connectivity between NR and LTE (NR-E-UTRA Dual Connectivity (NE-DC)), and the like.

In EN-DC, an LTE (E-UTRA) base station (eNB) is a master node (MN), and an NR base station (gNB) is a secondary node (SN). In NE-DC, an NR base station (gNB) is the MN, and an LTE (E-UTRA) base station (eNB) is the SN.

The radio communication system 1 may support dual connectivity between a plurality of base stations in the same RAT (for example, dual connectivity in which both the MN and the SN are NR base stations (gNB) (NR-NR Dual Connectivity (NN-DC)).

The radio communication system 1 may include a base station 11 that forms a macro cell C1 with a relatively wide coverage, and base stations 12 (12a to 12c) that are arranged within macro cell C1 and that form small cells C2 narrower than macro cell C1. A user terminal 20 may be located in at least one cell. The arrangement, number, and the like of cells and the user terminals 20 are not limited to the aspects illustrated in the drawings. Hereinafter, the base stations 11 and 12 will be collectively referred to as the "base stations 10" when the base stations 11 and 12 are not distinguished from each other.

The user terminal 20 may be connected to at least one of the plurality of base stations 10. The user terminal 20 may use Carrier Aggregation (CA) using a plurality of Component Carriers (CCs), and/or dual connectivity (DC).

Each CC may be included in a first Frequency Range 1 (FR1) and/or a second Frequency Range 2 (FR2). The macro cell C1 may be included in FR1, and the small cell C2 may be included in FR2. For example, FR1 may be a frequency range of 6 GHz or less (sub-6 GHz), and FR2 may be a frequency range higher than 24 GHz (above-24 GHz). Note that the frequency bands, definitions, and the like of FR1 and FR2 are not limited thereto, and, for example, FR1 may correspond to a frequency band higher than that of FR2.

Further, the user terminal 20 may perform communication in each CC by using Time Division Duplex (TDD) and/or Frequency Division Duplex (FDD).

The plurality of base stations 10 may be connected by wire (for example, an optical fiber or an X2 interface in compliance with Common Public Radio Interface (CPRI) or wirelessly (for example, NR communication). For example, when NR communication is used as a backhaul between the base stations 11 and 12, the base station 11 corresponding to a host station may be referred to as an Integrated Access Backhaul (IAB) donor, and the base station 12 corresponding to a relay station (relay) may be referred to as an IAB node.

The base station 10 may be connected to a core network 30 via another base station 10 or directly. The core network 30 may include, for example, at least one of an Evolved Packet Core (EPC), a 5G Core Network (5GCN), or a Next Generation Core (NGC), or the like.

The user terminal 20 may a terminal that corresponds to at least one of LTE, LTE-A, and 5G or other such communication methods.

In the radio communication system 1, a radio access method based on Orthogonal Frequency Division Multiplexing (OFDM) may be used. For example, in a Downlink (DL) and/or an Uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and the like may be used.

The radio access method may be referred to as a waveform. Note that, in the radio communication system 1, another radio access method (for example, another single carrier transmission method or another multicarrier transmission method) may be used as the UL and DL radio access method.

In the radio communication system 1, as a downlink channel, a Physical Downlink Shared Channel (PDSCH), a Physical Broadcast Channel (PBCH), a Physical Downlink Control Channel (PDCCH), or the like, which is shared by the user terminals 20, may be used.

Further, in the radio communication system 1, as an uplink channel, a Physical Uplink Shared Channel (PUSCH), a Physical Uplink Control Channel (PUCCH), a Physical Random Access Channel (PRACH), or the like, which is shared by the user terminals 20, may be used.

User data, higher layer control information, a System Information Block (SIB), and the like are transmitted by the PDSCH. User data, higher layer control information, and the like may be transmitted by the PUSCH. Furthermore, a Master Information Block (MIB) may be transmitted by the PBCH.

Lower layer control information may be transmitted by the PDCCH. Lower layer control information may include, for example, Downlink Control Information (DCI) including PDSCH and/or PUSCH scheduling information.

Note that the DCI for scheduling PDSCH may be referred to as DL assignment, DL DCI, or the like, and that the DCI for scheduling PUSCH may be referred to as a UL grant, UL DCI, or the like. Note that PDSCH is interchangeable with DL data, and PUSCH is interchangeable with UL data.

For PDCCH detection, a COntrol REsource SET (CORESET) and a search space may be used. A CORESET corresponds to a resource that searches for DCI. The search space corresponds to a search area and a search method for PDCCH candidates. One CORESET may be associated with one or more search spaces. The UE may monitor the CORESET related to a certain search space, based on the search space configuration.

One search space may correspond to a PDCCH candidate corresponding to one or more aggregation levels. One or more search spaces may be referred to as a search space set. Note that "search space" and "search space set", "search space configuration" and "search space set configuration", and "CORESET" and "CORESET configuration", and the like in the present disclosure are interchangeable.

Uplink Control Information (UCI) including at least one of Channel State Information (CSI), delivery acknowledgement information (which may be referred to as, for example, a Hybrid Automatic Repeat reQuest ACKnowledgement (HARQ-ACK), ACK/NACK, or the like), or a Scheduling Request (SR) may be transmitted by the PUCCH. A random access preamble for establishing a connection with a cell may be transmitted by a PRACH.

Note that, in the present disclosure, downlink, uplink, and the like may be expressed without adding "link". Various channels may also be expressed without adding "physical" in front of the channels.

In the radio communication system 1, a Synchronization Signal (SS), a Downlink Reference Signal (DL-RS), and the like may be transmitted. In the radio communication system 1, a Cell-specific Reference Signal (CRS), a Channel State Information Reference Signal (CSI-RS), a DeModulation Reference Signal (DMRS), a Positioning Reference Signal (PRS), a Phase Tracking Reference Signal (PTRS), or the like may be transmitted as the DL-RS.

The synchronization signal may be, for example, at least one of a Primary Synchronization Signal (PSS) or a Secondary Synchronization Signal (SSS). A signal block including the SS (PSS, SSS) and the PBCH (and the DMRS for PBCH) may be referred to as an SS/PBCH block, an SS block (SSB), or the like. Note that the SS, the SSB, or the like may also be referred to as a reference signal.

Furthermore, in the radio communication system 1, a measurement reference signal (Sounding Reference Signal (SRS)), a demodulation reference signal (DMRS), or the like may be transmitted as an Uplink Reference Signal (UL-RS). Note that, DMRS may be referred to as a "user terminal-specific reference signal (UE-specific Reference Signal)".

### (Base Station)

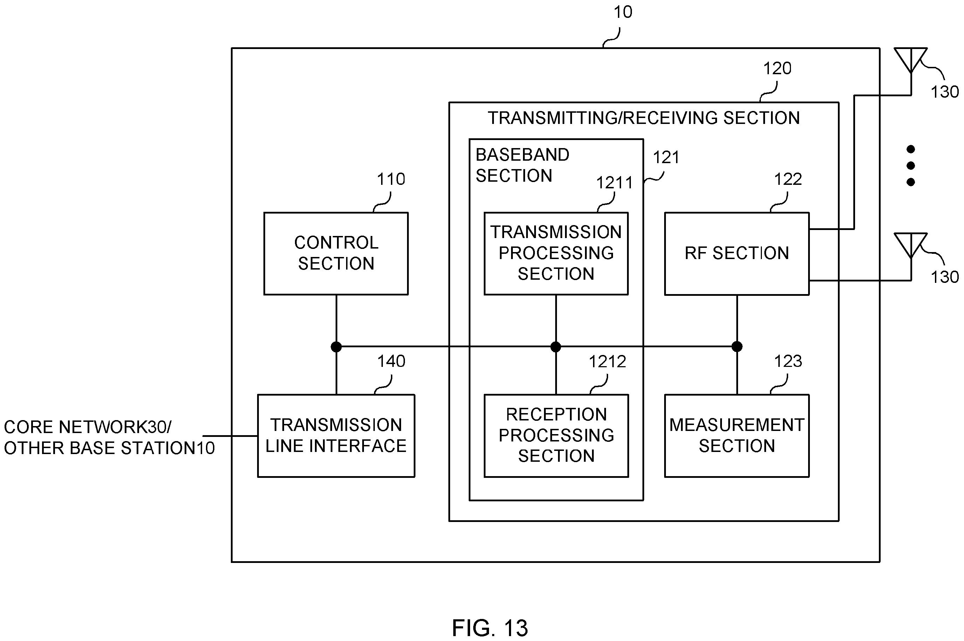

Fig. 13 is a diagram illustrating an example of a configuration of a base station according to one embodiment. The base station 10 includes a control section 110, a transmitting/receiving section 120, a transmitting/receiving antenna 130, and a transmission line interface 140. Note that one or more control sections 110, transmitting/receiving sections 120, transmitting/receiving antennas 130, and transmission line interfaces 140, respectively, may also be provided.

Note that this example mainly describes a functional block of a characterizing part according to the present embodiment, and it may be assumed that the base station 10 also has another functional block necessary for radio communication. Part of the processing by each section described hereinbelow may be omitted.

The control section 110 controls the entire base station 10. The control section 110 can be constituted by a controller, a control circuit, and the like that are described based on common understanding in the technical field according to the present disclosure.

The control section 110 may control signal generation, scheduling (for example, resource allocation or mapping), and the like. The control section 110 may control transmission/reception, measurement, and the like that uses the transmitting/receiving section 120, the transmitting/receiving antenna 130, and the transmission line interface 140. The control section 110 may generate data to be transmitted as a signal, control information, a sequence, and the like, and may forward same to the transmitting/receiving section 120. The control section 110 may perform call processing (such as the configuration and release) of a communication channel, management of the state of the base station 10, and management of radio resources, and the like.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted by a transmitter/receiver, an RF circuit, a baseband circuit, a filter, a phase shifter, a measurement circuit, a transmission/reception circuit, and the like, which are described based on common understanding in the technical field pertaining to the present disclosure.

The transmitting/receiving section 120 may be configured as an integrated transmitting/receiving section, or may be configured by a transmitting section and a receiving section. The transmitting section may be configured from the transmission processing section 1211 and the RF section 122. The receiving section may be configured from the reception processing section 1212, the RF section 122, and the measurement section 123.

The transmitting/receiving antenna 130 can be constituted by an antenna, for example, an array antenna or the like, which is described based on common understanding in the technical field according to the present disclosure.

The transmitting/receiving section 120 may transmit the above-described downlink channel, synchronization signal, downlink reference signal, and the like. The transmitting/receiving section 120 may receive the above-described uplink channel, uplink reference signal, and the like.

The transmitting/receiving section 120 may form a Tx beam and/or a reception beam by using digital beam forming (for example, precoding), analog beam forming (for example, phase rotation), and the like.

The transmitting/receiving section 120 (transmission processing section 1211) may perform Packet Data Convergence Protocol (PDCP) layer processing, Radio Link Control (RLC) layer processing (for example, RLC retransmission control), Medium Access Control (MAC) layer processing (for example, HARQ retransmission control), and the like on, for example, data, control information, and the like acquired from the control section 110, to generate a bit string to be transmitted.

The transmitting/receiving section 120 (transmission processing section 1211) may perform transmission processing such as channel encoding (which may include error correcting coding), modulation, mapping, filtering processing, Discrete Fourier Transform (DFT) processing (if necessary), Inverse Fast Fourier Transform (IFFT) processing, precoding, or digital-analog conversion on the bit string to be transmitted, to output a baseband signal.

The transmitting/receiving section 120 (RF section 122) may perform modulation to a radio frequency band, filtering processing, amplification, and the like on the baseband signal, and may transmit a signal in the radio frequency band via the transmitting/receiving antenna 130.

Meanwhile, the transmitting/receiving section 120 (RF section 122) may perform amplification, filtering processing, demodulation to a baseband signal, and the like on the signal in the radio frequency band received by the transmitting/receiving antenna 130.

The transmitting/receiving section 120 (reception processing section 1212) may apply reception processing such as analog-digital conversion, Fast Fourier Transform (FFT) processing, Inverse Discrete Fourier Transform (IDFT) processing (if necessary), filtering processing, demapping, demodulation, decoding (which may include error correction decoding), MAC layer processing, RLC layer processing, or PDCP layer processing on the acquired baseband signal, to acquire user data and the like.

The transmitting/receiving section 120 (measurement section 123) may perform measurement on the received signal. For example, the measurement section 123 may perform Radio Resource Management (RRM) measurement, Channel State Information (CSI) measurement, and the like, based on the received signal. The measurement section 123 may measure received power (for example, Reference Signal Received Power (RSRP)), received quality (for example, Reference Signal Received Quality (RSRQ), a Signal to Interference plus Noise Ratio (SINR), a Signal to Noise Ratio (SNR)), signal strength (for example, Received Signal Strength Indicator (RSSI)), propagation path information (for example, CSI), and the like. The measurement result may be outputted to the control section 110.

The transmission line interface 140 may transmit/receive a signal (backhaul signaling) to and from an apparatus included in the core network 30, another base station 10, or the like, and may perform steps such as acquiring and transmitting user data (user plane data), control plane data, and the like for the user terminal 20.

Note that the transmitting section and the receiving section of the base station 10 according to the present disclosure may be configured from at least one of the transmitting/receiving section 120, the transmitting/receiving antenna 130, or the transmission line interface 140.

The transmitting/receiving section 120 may transmit a signal to the terminal in a plurality of resources. For a channel state information (CSI) report that includes, for each group, resource indicators corresponding to at least two of the plurality, and a plurality of measurement results corresponding to each of the plurality of resource indicators, the terminal may determine ordering of the plurality of resource indicators and the plurality of measurement results included in the CSI report based on a plurality of sets of channel measurement resources (CMR), and may determine the quantization bit-width for the plurality of measurement results, and the control section 110 may control reception of the transmitted CSI report. The transmitting/receiving section 120 may transmit a specific higher layer parameter for configuring whether or not the same plurality of resource indicators can be included, for one set of channel measurement resources, in the CSI report (first and second embodiments).

### (User Terminal)

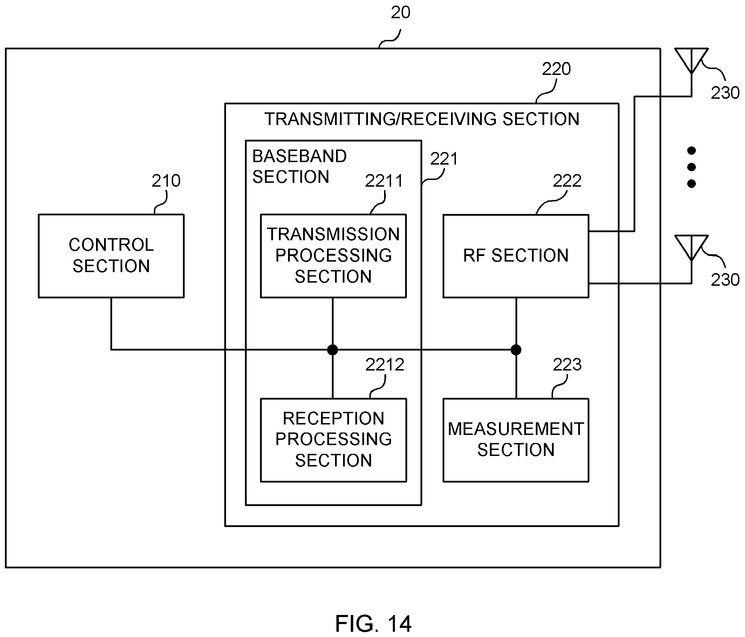

Fig. 14 is a diagram illustrating an example of a configuration of a user terminal according to one embodiment. The user terminal 20 includes a control section 210, a transmitting/receiving section 220, and a transmitting/receiving antenna 230. Note that one or more of the control sections 210, the transmitting/receiving sections 220, and the transmitting/receiving antennas 230, respectively, may be provided.

Note that this example mainly describes a functional block of a characterizing part according to the present embodiment, and it may be assumed that the user terminal 20 also has other functional blocks that are necessary for radio communication. Part of the processing by each section described hereinbelow may be omitted.

The control section 210 controls the entire user terminal 20. The control section 210 can be constituted by a controller, a control circuit, and the like that are described based on common understanding in the technical field related to the present disclosure.

The control section 210 may control signal generation, mapping, and the like. The control section 210 may control transmission/reception, measurement, and the like using the transmitting/receiving section 220 and the transmitting/receiving antenna 230. The control section 210 may generate data, control information, a sequence, and the like to be transmitted as signals, and may forward same to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted by a transmitter/receiver, an RF circuit, a baseband circuit, a filter, a phase shifter, a measurement circuit, a transmitting/receiving circuit, and the like, which are described based on common understanding in the technical field according to the present disclosure.

The transmitting/receiving section 220 may be configured from an integrated transmitting/receiving section, or may be configured from a transmitting section and a receiving section. The transmitting section may be configured from the transmission processing section 2211 and the RF section 222. The receiving section may be configured from the reception processing section 2212, the RF section 222, and the measurement section 223.

The transmitting/receiving antenna 230 can be constituted by an antenna, for example, an array antenna or the like, which is described based on common understanding in the technical field according to the present disclosure.

The transmitting/receiving section 220 may receive the above-described downlink channel, synchronization signal, downlink reference signal, and the like. The transmitting/receiving section 220 may transmit the above-described uplink channel, uplink reference signal, and the like.

The transmitting/receiving section 220 may form a Tx beam and/or a reception beam by using digital beam forming (for example, precoding), analog beam forming (for example, phase rotation), and the like.

The transmitting/receiving section 220 (transmission processing section 2211) may perform PDCP layer processing, RLC layer processing (for example, RLC retransmission control), MAC layer processing (for example, HARQ retransmission control), and the like on, for example, data, control information, and the like acquired from the control section 210, to generate a bit string to be transmitted.

The transmitting/receiving section 220 (transmission processing section 2211) may perform transmission processing such as channel encoding (which may include error correcting coding), modulation, mapping, filtering processing, DFT processing (if necessary), IFFT processing, precoding, or digital-analog conversion on the bit string to be transmitted, to output a baseband signal.

Note that whether or not to apply DFT processing may be determined based on configuration of transform precoding. In a case where transform precoding is enabled for a certain channel (for example, PUSCH), the transmitting/receiving section 220 (transmission processing section 2211) may perform DFT processing as the transmission processing in order to transmit the channel using a DFT-s-OFDM waveform, and otherwise need not perform DFT processing as the transmission processing.

The transmitting/receiving section 220 (RF section 222) may perform modulation to a radio frequency range, filtering processing, amplification, and the like on the baseband signal, and transmit a signal in the radio frequency range via the transmitting/receiving antenna 230.

Meanwhile, the transmitting/receiving section 220 (RF section 222) may perform amplification, filtering processing, demodulation to a baseband signal, and the like on the signal in the radio frequency range received by the transmitting/receiving antenna 230.

The transmitting/receiving section 220 (reception processing section 2212) may apply reception processing such as analog-digital conversion, FFT processing, IDFT processing (if necessary), filtering processing, demapping, demodulation, decoding (which may include error correction decoding), MAC layer processing, RLC layer processing, or PDCP layer processing on the acquired baseband signal, to acquire user data and the like.

The transmitting/receiving section 220 (measurement section 223) may perform measurement on the received signal. For example, the measurement section 223 may perform RRM measurement, CSI measurement, and the like based on the received signal. The measurement section 223 may measure received power (for example, RSRP), received quality (for example, RSRQ, SINR, or SNR), signal strength (for example, RSSI), propagation path information (for example, CSI), and the like. The measurement result may be outputted to the control section 210.

Note that the transmitting section and the receiving section of the user terminal 20 in the present disclosure may by constituted by at least one of the transmitting/receiving section 220, the transmitting/receiving antenna 230, and the transmission line interface 240.

The control section 210 may discriminate, for a channel state information (CSI) report that includes, for each group, a plurality of resource indicators and a plurality of measurement results corresponding to each of the plurality of resource indicators, ordering of the plurality of resource indicators and the plurality of measurement results included in the CSI report based on a plurality of sets of channel measurement resources (CMR), and may determine the quantization bit-width for the plurality of measurement results. The transmitting/receiving section 220 may transmit the CSI report. The control section 210 may discriminate, based on configuration of a specific higher layer parameter, whether or not the same plurality of resource indicators can be included, for one CMR set, in the CSI report (first and second embodiments).

The control section 210 may quantize, by using a first bit-width, two or more measurement results among the plurality of measurement results, and quantize, by using a second bit-width, measurement results other than the two or more measurement results (second embodiment).

A field related to ordering of the plurality of resource indicators may be included in the CSI report (second embodiment).

### (Hardware Configuration)

Note that the block diagrams that have been used to describe the above embodiments illustrate blocks in functional units. These functional blocks (components) may be implemented using arbitrary combinations of hardware and/or software. Further, the method for implementing each functional block is not particularly limited. That is, each functional block may be implemented using a single apparatus obtained through physical or logical aggregation, or may be implemented by directly or indirectly connecting two or more physically or logically separate apparatuses (in a wired manner, wirelessly, or the like, for example) and using these apparatuses. Functional block may be implemented by combining software with the above-described one apparatus or the above-described plurality of apparatuses.

Here, functions include, but are not limited to, discriminating, determining, judging, calculating, computing, processing, deriving, investigating, searching, ascertaining, receiving, transmitting, outputting, accessing, solving, selecting, choosing, establishing, comparing, assuming, expecting, regarding, broadcasting, notifying, communicating, forwarding, configuring, reconfiguring, allocating (mapping), assigning, and the like. For example, a functional block (component) that has a transmission function may be referred to as a transmitting unit, a transmitter, and the like. In any case, as described above, the implementation method is not particularly limited.

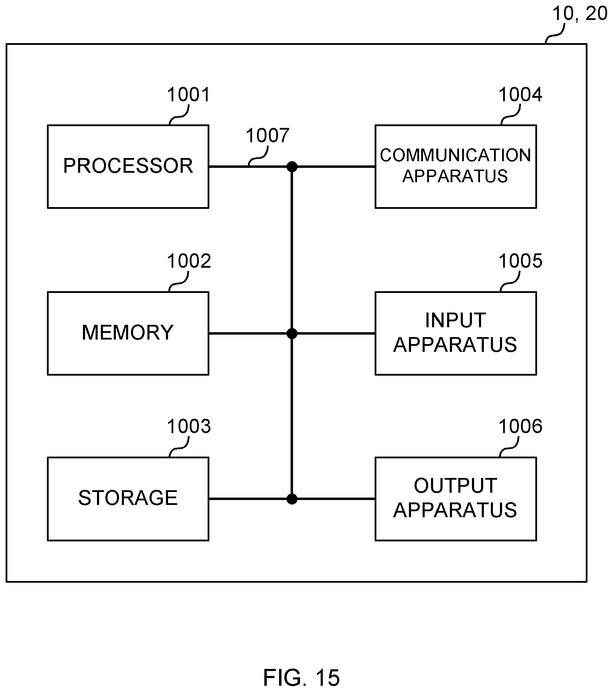

For example, the base station, the user terminal, and the like according to one embodiment of the present disclosure may function as a computer that executes the processing of the radio communication method of the present disclosure. Fig. 15 is a diagram illustrating an example of a hardware configuration of a base station and a user terminal according to one embodiment. Physically, the above-described base station 10 and user terminal 20 may be constituted as a computer apparatus that includes a processor 1001, a memory 1002, a storage 1003, a communication apparatus 1004, an input apparatus 1005, an output apparatus 1006, a bus 1007, and the like.

Note that, in the present disclosure, terms such as apparatus, circuit, device, section, or unit are interchangeable. The hardware configuration of the base station 10 and the user terminal 20 may be constituted to include one or more of the apparatuses illustrated in the drawings, or may be constituted not to include some apparatuses.

For example, although only one processor 1001 is illustrated, a plurality of processors may be provided. Further, the processing may be executed by one processor, or the processing may be executed by two or more processors simultaneously or sequentially, or using other methods. Note that the processor 1001 may be implemented using one or more chips.

Each function of the base station 10 and the user terminal 20 is implemented by predetermined software (program) being read on hardware such as the processor 1001 and the memory 1002, for example, by which the processor 1001 performs operations, controlling communication via the communication apparatus 1004, and controlling reading and/or writing of data in the memory 1002 and the storage 1003.

The processor 1001 controls the whole computer by, for example, running an operating system. The processor 1001 may be constituted by a central processing unit (CPU) including an interface with peripheral equipment, and a control apparatus, an operation apparatus, a register, and the like. For example, at least part of the above-described control section 110 (210), transmitting/receiving section 120 (220), and the like may be implemented by the processor 1001.

Further, the processor 1001 reads a program (program code), a software module, data, and the like from the storage 1003 and/or the communication apparatus 1004 into the memory 1002, and performs various types of processing according to this program, software module, data, and the like. As the program, a program that causes a computer to execute at least a part of the operation described in the above-described embodiment is used. For example, the control section 110 (210) may be implemented by a control program that is stored in the memory 1002 and that operates in the processor 1001, and other functional blocks may be similarly implemented.

The memory 1002 is a computer-readable recording medium, and may be constituted by, for example, at least one of a Read Only Memory (ROM), an Erasable Programmable ROM (EPROM), an Electrically EPROM (EEPROM), a Random Access Memory (RAM), or other appropriate storage media. The memory 1002 may be referred to as a register, a cache, a main memory (primary storage apparatus), and the like. The memory 1002 is capable of storing a program (program code), a software module, and the like that are executable for implementing the radio communication method according to one embodiment of the present disclosure.

The storage 1003 is a computer-readable recording medium, and may be constituted by, for example, at least one of a flexible disk, a floppy (registered trademark) disk, a magneto-optical disk (for example, a Compact Disc ROM (CD-ROM) or the like), a digital versatile disk, a Blu-ray (registered trademark) disk), a removable disk, a hard disk drive, a smart card, a flash memory device (for example, a card, a stick, or a key drive), a magnetic stripe, a database, a server, or other appropriate storage media. The storage 1003 may be referred to as a secondary storage apparatus.

The communication apparatus 1004 is hardware (transmitting/receiving device) for performing inter-computer communication via a wired network and/or a wireless network, and is referred to as, for example, a network device, a network controller, a network card, a communication module, and the like. The communication apparatus 1004 may be constituted to include, for example, a high frequency switch, a duplexer, a filter, a frequency synthesizer, and the like in order to implement, for example, Frequency Division Duplex (FDD) and/or Time Division Duplex (TDD). For example, the transmitting/receiving section 120 (220), the transmitting/receiving antenna 130 (230), and the like described above may be implemented by the communication apparatus 1004. The transmitting/receiving section 120 (220) may be implemented by being physically or logically separated into the transmitting section 120a (220a) and the receiving section 120b (220b).

The input apparatus 1005 is an input device for receiving inputs from the outside (for example, a keyboard, a mouse, a microphone, a switch, a button, a sensor, and the like). The output apparatus 1006 is an output device that performs outputs to the outside (for example, a display, a loudspeaker, a Light Emitting Diode (LED) lamp, or the like). Note that the input apparatus 1005 and the output apparatus 1006 may be provided in an integrated configuration (for example, a touch panel).

Furthermore, apparatuses such as the processor 1001 and the memory 1002 are connected by the bus 1007 for communicating information. The bus 1007 may be constituted using a single bus, or may be constituted by buses that vary between apparatuses.

Further, the base station 10 and the user terminal 20 may be constituted to include hardware such as a microprocessor, a Digital Signal Processor (DSP), an Application Specific Integrated Circuit (ASIC), a Programmable Logic Device (PLD), or a Field Programmable Gate Array (FPGA), and some or all of the functional blocks may be realized by using the hardware. For example, the processor 1001 may be implemented using at least one of these pieces of hardware.

### (Variations)

Note that terms described in the present disclosure and terms necessary for understanding the present disclosure may be replaced with terms that have the same or similar meanings. For example, channel, symbol, and signal (signal or signaling) are interchangeable. Further, a signal may be a message. A reference signal can be abbreviated as RS, and may also be referred to as a pilot, a pilot signal, and so on, depending on which standard applies. In addition, a Component Carrier (CC) may be referred to as a cell, a frequency carrier, a carrier frequency, and so on.

A radio frame may be constituted by one or more periods (frames) in the time domain. Each of the one or more periods (frames) constituting a radio frame may be referred to as a subframe. Further, a subframe may be constituted by one or more slots in the time domain. A subframe may be a fixed duration (for example, 1 ms) that is not dependent on numerology.

Here, the numerology may be a communication parameter used for transmission and/or reception of a certain signal or channel. For example, the numerology may indicate at least one of SubCarrier Spacing (SCS), a bandwidth, a symbol length, a cyclic prefix length, a Transmission Time Interval (TTI), the number of symbols per TTI, a radio frame configuration, specific filter processing performed by a transceiver in the frequency domain, or specific windowing processing performed by a transceiver in the time domain.

The slot may be constituted by one or more symbols in the time domain (Orthogonal Frequency Division Multiplexing (OFDM) symbols, Single Carrier Frequency Division Multiple Access (SC-FDMA) symbols, and the like). Further, a slot may be a time unit based on numerology.

A slot may include a plurality of mini slots. Each mini slot may be constituted by one or more symbols in the time domain. Further, a mini slot may be referred to as a subslot. A mini slot may by constituted by fewer symbols than a slot. A PDSCH (or PUSCH) transmitted in a time unit larger than a mini slot may be referred to as PDSCH (PUSCH) mapping type A. A PDSCH (or a PUSCH) transmitted using a mini slot may be referred to as PDSCH (PUSCH) mapping type B.

A radio frame, a subframe, a slot, a mini slot and a symbol all represent the time unit when a signal is being transmitted. The radio frame, the subframe, the slot, the mini slot, and the symbol may be called by other applicable names, respectively. Note that time units such as frame, subframe, slot, mini slot, and symbol in the present disclosure are interchangeable.

For example, one subframe may be referred to as a TTI, a plurality of consecutive subframes may be referred to as TTIs, or one slot or one mini slot may be referred to as a TTI. That is, the subframe and/or the TTI may be a subframe (1 ms) in the existing LTE, may be a period shorter than 1 ms (for example, one to thirteen symbols), or may be a period longer than 1 ms. Note that the unit representing the TTI may be referred to as a slot, a mini slot, and so on, instead of a subframe.

Here, a TTI refers to the minimum time unit of scheduling in radio communication, for example. For example, in an LTE system, a base station performs scheduling to allocate radio resources (a frequency bandwidth, transmit power, and the like that can be used in each user terminal) to each user terminal in TTI units. Note that the definition of TTI is not limited thereto.

The TTI may be a transmission time unit of a channel-coded data packet (transport block), a code block, a codeword, and the like or may be a processing unit of scheduling, link adaptation, and the like. Note that, when the TTI is given, a time interval (for example, the number of symbols) to which a transport block, a code block, a codeword, or the like is actually mapped may be shorter than the TTI.

Note that, when one slot or one mini slot is referred to as a TTI, one or more TTIs (that is, one or more slots or one or more mini slots) may be the minimum time unit of scheduling. Also, the number of slots (the number of mini slots) constituting this minimum time unit for scheduling may be controlled.

A TTI having a time duration of 1 ms may be referred to as a usual TTI (TTI in 3GPP Rel. 8 to 12), a normal TTI, a long TTI, a usual subframe, a normal subframe, a long subframe, a slot, and so on. A TTI that is shorter than a usual TTI may be referred to as a shortened TTI, a short TTI, a partial TTI (a partial TTI or a fractional TTI), a shortened subframe, a short subframe, a mini slot, a subslot, a slot, and so on.

Note that a long TTI (for example, a normal TTI, a subframe, and the like) is interchangeable with a TTI having a time duration exceeding 1 ms, and a short TTI (for example, a shortened TTI) is interchangeable with a TTI having a TTI duration less than the TTI duration of a long TTI and not less than 1 ms.

A resource block (RB) is the unit of resource allocation in the time domain and the frequency domain, and may include one or more contiguous subcarriers in the frequency domain. The number of subcarriers included in an RB may be the same regardless of the numerology, and may be twelve, for example. The number of subcarriers included in an RB may also be determined based on a numerology.

Further, an RB may include one or more symbols in the time domain, and may be one slot, one mini slot, one subframe or one TTI in length. One TTI, one subframe, and so on may each be constituted by one or more resource blocks.

Note that one or more RBs may be referred to as a Physical Resource Block (PRB), a Sub-Carrier Group (SCG), a Resource Element Group (REG), a PRB pair, an RB pair, and so on.

Furthermore, a resource block may be constituted by one or more Resource Elements (REs). For example, one RE may be a radio resource field of one subcarrier and one symbol.

A bandwidth part (BWP) (which may be referred to as a partial bandwidth or the like) may represent a subset of contiguous common resource blocks (RBs) for a certain numerology in a certain carrier. Here, a common RB may be specified by the index of the RB based on a common reference point of the carrier. PRBs may be defined by a certain BWP and numbered within the BWP.

The BWP may include a UL BWP (BWP for UL) and a DL BWP (BWP for DL). For the UE, one or more BWPs may be configured within one carrier.

At least one of the configured BWPs may be active, and it need not be assumed that the UE transmits/receives a predetermined signal/channel outside the active BWP. Note that "cell", "carrier", and so on in the present disclosure is interchangeable with "BWP".

Note that the structures of radio frames, subframes, slots, mini slots, symbols, and the like described above are merely examples. For example, configurations such as the number of subframes included in a radio frame, the number of slots per subframe or radio frame, the number of mini slots included in a slot, the number of symbols and RBs included in a slot or a mini slot, the number of subcarriers included in an RB, the number of symbols in a TTI, the symbol length, the length of cyclic prefix (CP), and the like can be variously changed.

Further, the information, parameters, and the like described in the present disclosure may be represented using absolute values, or may be represented using relative values with respect to predetermined values, or may be represented using other corresponding information. For example, a radio resource may be specified by a predetermined index.

The names used for parameters and the like in the present disclosure are in no respect limiting. Further, any mathematical expression or the like that uses these parameters may differ from those explicitly disclosed in the present disclosure. Because various channels (PUCCH, PDCCH, and the like) and information elements can be identified by any suitable names, various names allocated to these various channels and information elements are not restrictive names in any respect.

The information, signals, and the like described in the present disclosure may be represented using any of a variety of different technologies. For example, data, instructions, commands, information, signals, bits, symbols and chips, all of which may be referenced throughout the herein-contained description, may be represented by voltages, currents, electromagnetic waves, magnetic fields or magnetic particles, optical fields or photons, or any combination thereof.

In addition, information, signals, and the like can be outputted in a direction from a higher layer to a lower layer and/or a direction from a lower layer to a higher layer. Information, signals, and the like may be inputted and outputted via a plurality of network nodes.

The information, signals, and the like that are inputted may be saved in a specific location (for example, a memory), or may be managed using a management table. The information, signals, and the like which are inputted and outputted can be overwritten, updated, or appended. The outputted information, signals, and the like may be deleted. The information, signals, and the like that are inputted may also be transmitted to other apparatuses.

Notification of information may be performed, not only by using the aspects/embodiments described in the present disclosure, but also using another method. For example, the notification of information in the present disclosure may be performed by using physical layer signaling (for example, Downlink Control Information (DCI) or Uplink Control Information (UCI)), higher layer signaling (for example, Radio Resource Control (RRC) signaling, broadcast information (Master Information Block (MIB)), System Information Block (SIB), or the like), or Medium Access Control (MAC) signaling), another signal, or a combination thereof.

Note that the physical layer signaling may be referred to as Layer 1/Layer 2 (L1/L2) control information (L1/L2 control signal), L1 control information (L1 control signal), and so on. Further, the RRC signaling may be referred to as an RRC message, and may be, for example, an RRC Connection Setup message, an RRC Connection Reconfiguration message, and so on. Further, notification of the MAC signaling may be performed using, for example, a MAC Control Element (CE).

Also, the notification of predetermined information (for example, the notification of information to the effect that "X holds") does not necessarily have to be sent explicitly, and can be sent implicitly (for example, by not performing notification of this predetermined information, or by performing notification of another piece of information).

Judgments may be made using values represented by one bit (0 or 1), may be made using Boolean values that represent true or false, or may be made by comparing numerical values (for example, comparison against a predetermined value).

Software, whether referred to as "software", "firmware", "middleware", "microcode" or "hardware description language", or called by other names, should be interpreted broadly, to mean instructions, instruction sets, code, code segments, program codes, programs, subprograms, software modules, applications, software applications, software packages, routines, subroutines, objects, executable files, execution threads, procedures, functions, and so on.

Also, software, instructions, information and the like may be transmitted and received via communication media. For example, when software is transmitted from a website, a server, or another remote source by using a wired technology (coaxial cable, optical fiber cable, twisted pair, Digital Subscriber Line (DSL), or the like) and/or a wireless technology (infrared rays, microwaves, and the like), the wired technology and/or the wireless technology is included within the definition of a transmission medium.

The terms "system" and "network" used in the present disclosure may be used interchangeably. The "network" may mean an apparatus (for example, a base station) included in the network.

In the present disclosure, terms such as "precoding", "precoder", "weight (precoding weight)", "Quasi-Co-Location (QCL)", "Transmission Configuration Indication state (TCI state)", "spatial relation", "spatial domain filter", "transmit power", "phase rotation", "antenna port", "antenna port group", "layer", "number of layers", "rank", "resource", "resource set", "resource group", "beam", "beam width", "beam angle", "antenna", "antenna element", and "panel" may be used interchangeably.

In the present disclosure, terms such as "base station (BS)", "radio base station", "fixed station", "NodeB", "eNB(eNodeB)", "gNB(gNodeB)", "access point", "transmission point (TP)", "reception point (RP)", "transmission/reception point (TRP)", "panel", "cell", "sector", "cell group", "carrier", and "component carrier", can be used interchangeably. The base station is sometimes referred to using terms such as a macro cell, a small cell, a femto cell, or a pico cell.

The base station is capable of accommodating one or more (for example, three) cells. In a case where the base station accommodates a plurality of cells, the entire coverage area of the base station can be partitioned into a plurality of smaller areas, and each smaller area can provide communication services through a base station subsystem (for example, small base station for indoors (Remote Radio Head (RRH))). The term "cell" or "sector" refers to a part or the whole of a coverage area of the base station and/or the base station subsystem that performs a communication service in this coverage.

In the present disclosure, terms such as "Mobile Station (MS)", "user terminal", "User Equipment (UE)", and "terminal" may be used interchangeably.

The mobile station may be referred to as a subscriber station, mobile unit, subscriber station, wireless unit, remote unit, mobile device, wireless device, wireless communication device, remote device, mobile subscriber station, access terminal, mobile terminal, wireless terminal, remote terminal, handset, user agent, mobile client, client, or some other suitable terms.

The base station and/or the mobile station may be called a transmitting apparatus, a receiving apparatus, a wireless communication apparatus, and the like. Note that the base station and/or the mobile station may be a device mounted on a moving body, the moving body itself, or the like. The moving body may be a means of transportation (for example, a car, an airplane, or the like), an unmanned moving body (for example, a drone, an autonomous car, or the like), or a (manned or unmanned) robot. Note that the base station and/or the mobile station also includes an apparatus that does not necessarily move during a communication operation. For example, the base station and/or the mobile station may be an Internet of Things (IoT) device such as a sensor.

Further, base station in the present disclosure is interchangeable with user terminal. For example, each aspect/embodiment of the present disclosure may be applied to a configuration in which communication between the base station and the user terminal is replaced with communication between a plurality of user terminals (which may be referred to as, for example, Device-to-Device (D2D), Vehicle-to-Everything (V2X), and so on). In this case, the user terminal 20 may have the functions of the base station 10 described above. Furthermore, words such as "uplink" and "downlink" are interchangeable with words corresponding to terminal-to-terminal communication (for example, "sidelink"). For example, uplink channel, downlink channel, and the like are interchangeable with side channel.

Likewise, user terminal in the present disclosure is interchangeable with base station. In this case, the base station 10 may have the functions of the user terminal 20 described above.

In the present disclosure, an operation performed by the base station may also be performed by an upper node thereof in some cases. In a network including one or more network nodes having base stations, it is clear that various operations performed for communication with a terminal can be performed by a base station, or one or more network nodes (examples of which include but are not limited to Mobility Management Entity (MME) and Serving-Gateway (S-GW)) other than the base station, or a combination thereof.

The aspects/embodiments illustrated in the present disclosure may be used individually or in combinations, which may be switched depending on the mode of implementation. Further, the order of processing procedures, sequences, flowcharts, and the like of the aspects/embodiments described in the present disclosure may be re-ordered as long as there is no inconsistency. For example, the methods described in the present disclosure have presented various step elements using an exemplary order, and are not limited to the presented specific order.

Each aspect/embodiment described in the present disclosure may be applied to a system using Long-Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG) (xG (x is, for example, an integer or decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), or another appropriate radio communication method, a next-generation system expanded on the basis of the foregoing, and the like. Further, a plurality of systems may be combined (for example, a combination of LTE or LTE-A and 5G, and the like) and applied.

The phrase "based on" as used in the present disclosure does not mean "based only on", unless otherwise specified. In other words, the phrase "based on" means both "based only on" and "based at least on".

All references to the elements using designations such as "first" and "second" as used in the present disclosure do not generally limit the amount or sequence of these elements. These designations can be used in the present disclosure as a convenient way of distinguishing between two or more elements. In this way, reference to the first and second elements does not imply that only two elements may be employed, or that the first element must precede the second element in some way.

The term "discriminating (determining)" as used in the present disclosure may include a wide variety of actions. For example, "discriminating(determining)" may be regarded as judging, calculating, computing, processing, deriving, investigating, looking up (or searching or inquiring) (for example, looking up in a table, database, or another data structure), ascertaining, and the like.

Furthermore, "discriminating (determining)" may be interpreted to mean discriminating (determining) actions such as receiving (for example, receiving information), transmitting (for example, transmitting information), inputting, outputting, accessing (for example, accessing data in a memory), and so on.

In addition, "discriminating (determining)" may be interpreted to mean "discriminating (determining)" actions such as resolving, selecting, choosing, establishing, comparing, and so on. In other words, "discriminating (determining)" may be interpreted to mean discriminating (determining) some kind of action.

In addition, "discriminating (determining)" is interchangeable with "assuming", "expecting", "considering", and so on.

The "maximum transmit power" described in the present disclosure may mean the maximum value of the transmit power, the nominal UE maximum transmit power, or the rated UE maximum transmit power.

The terms "connected" and "coupled" used in the present disclosure, or any variation of these terms mean all direct or indirect connections or couplings between two or more elements, and may include the presence of one or more intermediate elements between two elements that are "connected" or "coupled" to each other. The coupling or connection between the elements may be physical, logical, or a combination thereof. For example, "connection" is interchangeable with "access".

In the present disclosure, when two elements are connected together, it is conceivable that the two elements are "connected" or "coupled" to each other by using one or more electrical wires, cables, printed electrical connections, and the like, and, as some non-limiting and non-inclusive examples, by using electromagnetic energy having wavelengths in the radio frequency domain, microwave region, or optical (both visible and invisible) region, or the like.

In the present disclosure, the phrase "A and B are different" may mean "A and B are different from each other". Note that this phrase may mean that "A and B are different from C". Terms such as "separate", "coupled", and the like may also be interpreted similarly to "different".

When "include", "including", and variations of these terms are used in the present disclosure, these terms are intended to be inclusive similarly to the term "comprising". Moreover, the term "or" used in the present disclosure is intended to be not an exclusive-OR.

In the present disclosure, when articles are added in translation, as in, for example, "a", "an", and "the" in English, the present disclosure may incorporate the fact that the nouns following these articles are plural.

The invention according to the present disclosure has been described in detail hereinabove; however, it is obvious to those skilled in the art that the invention according to the present disclosure is not limited to the embodiments described in the present disclosure. The invention according to the present disclosure can be embodied with various corrections and in various modified aspects, without departing from the spirit and scope of the invention defined on the basis of the description of claims. Thus, the description of the present disclosure is for the purpose of describing examples and does not bring any limiting meaning to the invention according to the present disclosure.

This application is based on Japanese Patent Application No. 2021-089589 filed on May 27, 2021. The contents of this are all incorporated herein.

## Claims

1. A terminal comprising:
a control section that, for a channel state information (CSI) report that includes, for each one group, a plurality of resource indicators and a plurality of measurement results corresponding to each of the plurality of resource indicators, determines ordering of the plurality of resource indicators and the plurality of measurement results included in the CSI report based on a plurality of sets of channel measurement resources (CMR), and that determines a quantization bit-width for the plurality of measurement results; and
a transmitting section that transmits the CSI report,
wherein the control section determines, based on configuration of a specific higher layer parameter, whether or not the same plurality of resource indicators can be included, for one CMR set, in the CSI report.

2. The terminal according to claim 1, wherein the control section quantizes, by using a first bit-width, two or more measurement results among the plurality of measurement results, and quantizes, by using a second bit-width, measurement results other than the two or more measurement results.

3. The terminal according to claim 1, wherein the CSI report includes a field related to ordering of the plurality of resource indicators.

4. A radio communication method for a terminal, comprising the steps of:
for a channel state information (CSI) report that includes, for each one group, a plurality of resource indicators and a plurality of measurement results corresponding to each of the plurality of resource indicators, discriminating ordering of the plurality of resource indicators and the plurality of measurement results included in the CSI report based on a plurality of sets of channel measurement resources (CMR), and determining the quantization bit-width for the plurality of measurement results; and
transmitting the CSI report,
wherein, in the terminal, it is discriminated, based on configuration of a specific higher layer parameter, whether or not the same plurality of resource indicators can be included, for one CMR set, in the CSI report.

5. A base station comprising:
a transmitting section that transmits a signal to a terminal in a plurality of resources; and
a control section that controls reception of a transmitted channel state information (CSI) report, the CSI report including, for each one group, resource indicators corresponding to at least two of the plurality, and a plurality of measurement results corresponding to each of the plurality of resource indicators, and the terminal determining ordering of the plurality of resource indicators and the plurality of measurement results included in the CSI report based on a plurality of sets of channel measurement resources (CMR), and determining the quantization bit-width for the plurality of measurement results,
wherein the transmitting section transmits a specific higher layer parameter for configuring whether or not the same plurality of resource indicators can be included, for one set of channel measurement resources, in the CSI report.
